(19) Europäisches Patentamt
European Patent Office
Office européen des brevets

(11) **EP 4 736 806 A1**

(12) **EUROPEAN PATENT APPLICATION**
published in accordance with Art. 153(4) EPC

(43) Date of publication:
06.05.2026 Bulletin 2026/19

(21) Application number: 24831883.4

(22) Date of filing: 24.06.2024

(51) International Patent Classification (IPC):
*A61C 5/64* (2017.01)

(52) Cooperative Patent Classification (CPC):
**A61C 5/64**

(86) International application number:
**PCT/JP2024/022705**

(87) International publication number:
**WO 2025/005022 (02.01.2025 Gazette 2025/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 30.06.2023 JP 2023108657

(71) Applicant: **Kuraray Noritake Dental Inc.
Kurashiki-shi, Okayama 710-0801 (JP)**

(72) Inventors:
• **KAWANA Mariko
Tainai-shi, Niigata 959-2653 (JP)**

• **NOJIRI Yamato
Tokyo 100-0004 (JP)**
• **ATAKA Kensuke
Tainai-shi, Niigata 959-2653 (JP)**
• **MURAYAMA Momoe
Tainai-shi, Niigata 959-2653 (JP)**
• **SESHIMO Satoshi
Uonuma-shi, Niigata 946-0051 (JP)**
• **OHDAIRA Toshiyuki
Uonuma-shi, Niigata 946-0051 (JP)**

(74) Representative: **D Young & Co LLP
3 Noble Street
London EC2V 7BQ (GB)**

(54) **PASTE INJECTOR**

(57) In order to provide a paste dispenser capable of determining a relative position between a syringe and an attachment member at a predetermined position, a paste dispenser includes an attachment member (M) that is detachably attached to a syringe (3) including discharge ports (51, 51'). The attachment member (M) includes a tubular external body (OM), into which the syringe (3) is inserted and which is rotatable about a central axis (CA), and an inside member (IM) that is disposed inside the external body (OM). The external body (OM) is fixed to the syringe (3) via an engagement structure configured to engage by insertion of the syringe (3) along the central axis (CA) and by rotation of the external body about the central axis (CA). The engagement structure includes at least three engagement pairs, each pair including an engaging portion (45) that is formed on the syringe (3) and an engaged portion (107) that is formed in the external body (OM) and engageable with the engaging portion (45). The at least three engagement pairs are aligned along a rotation direction of the external body (OM) and are non-point symmetrical about a central point on the central axis (CA) when viewed along the central axis (CA).

EP 4 736 806 A1

[FIG.24]

## Description

[Technical Field]

The present invention relates to a paste dispenser.

[Background Art]

It is known a dental material that is made of a plurality of types of pastes and is prepared by mixing them just before use. In order to inject such dental material into a predetermined position, there is a paste dispenser that discharges the plurality of types of the pastes while mixing them together.

The paste dispenser includes a syringe that individually stores a plurality of types of pastes, a plunger that pushes out the pastes, and an attachment member that is detachably attached to discharge ports of the syringe. The attachment member is either a cap that is attached when the paste dispenser is stored or transported, or a static mixer that is for ejecting the pastes discharged from the syringe while mixing them, and the attachment member can be replaced as necessary.

For example, Patent Literature 1 discloses the cap.

[Prior Art Documents]

[Patent Literature]

[Patent Literature 1] Japanese Patent Application Publication No. 2007-504058

[Summary of Invention]

[Problem to be solved]

The cap disclosed in Patent Literature 1 includes an external body that is fixed to the syringe, and an inside member that is disposed inside the external body and includes insertion portions to be inserted into discharge ports. Here, a plurality of types of pastes to be mixed together by a paste dispenser undergo changes such as solidification through the mixing. Therefore, in a repeated attachment and detachment of the cap, for example, if an insertion portion to which a first paste has been attached is inserted into a discharge port from which a second paste is discharged, the first and second pastes are mixed together to generate paste changes such as solidification inside the discharge port.

Also, in the static mixer, when a paste passage to be inserted into a discharge port is determined in advance, it is necessary to make the discharge port, into which the paste passage is inserted, properly match with the paste passage when attaching the static mixer. Thus, it is necessary to attach the attachment member to the syringe in a predetermined orientation.

An object of the present invention is to provide a paste dispenser that is capable of determining a relative position between a syringe and an attachment member at a predetermined position when the attachment member is attached to the syringe.

[Solution to Problem]

A paste dispenser of the present invention includes a syringe that includes a plurality of paste storage chambers filled with pastes, a plurality of discharge ports, each of which opens at one end of each of the plurality of the paste storage chambers, and a plurality of filling ports, each of which opens at another end of each of the plurality of the paste storage chambers; a plunger that is inserted into the paste storage chambers from the filling ports and is configured to push out the pastes through the discharge ports; and an attachment member that is detachably attached to a tip end portion of the syringe where the discharge ports are formed. The attachment member includes a tubular external body into which the syringe is inserted, the external body being rotatable about a central axis of the syringe; and an inside member that is disposed inside the external body, the inside member including a plurality of insertion portions that are respectively inserted into the plurality of the discharge ports and being rotatable about the central axis relative to the external body. In order to achieve the object, the external body is fixed to the syringe via an engagement structure, the engagement structure configured to engage by insertion of the syringe along the central axis and by rotation of the external body about the central axis. The engagement structure includes at least three engagement pairs, each pair including an engaging portion that is formed on the syringe and an engaged portion that is formed in the external body and is engageable with the engaging portion. The at least three engagement pairs are aligned along a rotation direction of the external body and are non-point symmetrical about a central point on the central axis when viewed along the central axis.

[Effects of Invention]

According to the above configuration, the paste dispenser of the present invention can determine the relative position between the syringe and the attachment member at a predetermined position when the attachment member is attached to the syringe.

[Brief Description of Drawings]

[FIG. 1] FIG. 1 is a perspective view of a paste dispenser including a static mixer of a first embodiment.
[FIG. 2] FIG. 2 is an exploded perspective view of the paste dispenser of the first embodiment.

[FIG. 3] FIG. 3 is a sectional view of the static mixer fixed to a tip end portion of a syringe of the first embodiment, the sectional view being taken in the width direction at a position passing through a central axis extending in the longitudinal direction.

[FIG. 4A] FIG. 4A is a front view of the syringe of the first embodiment.

[FIG. 4B] FIG. 4B is a side view of the syringe of the first embodiment.

[FIG. 4C] FIG. 4C is a plan view of the syringe of the first embodiment.

[FIG. 4D] FIG. 4D is a bottom view of the syringe of the first embodiment.

[FIG. 5] FIG. 5 is a sectional view taken along line V-V shown in FIG. 4C.

[FIG. 6] FIG. 6 is an end surface view taken along line VI-VI shown in FIG. 4A.

[FIG. 7A] FIG. 7A is a front view of a plunger body of the first embodiment.

[FIG. 7B] FIG. 7B is a side view of the plunger body of the first embodiment.

[FIG. 7C] FIG. 7C is a plan view of the plunger body of the first embodiment.

[FIG. 7D] FIG. 7D is a bottom view of the plunger body of the first embodiment.

[FIG. 8] FIG. 8 is a sectional view taken along line VIII-VIII shown in FIG. 7A.

[FIG. 9A] FIG. 9A is a perspective view of an elastic-body holder of the first embodiment.

[FIG. 9B] FIG. 9B is a bottom view of the elastic-body holder of the first embodiment.

[FIG. 10] FIG. 10 is a sectional view taken in the width direction perpendicular to the longitudinal direction at a neck portion of the elastic-body holder with an O-ring attached to an annular groove portion, in the paste dispenser of the first embodiment.

[FIG. 11] FIG. 11 shows a sectional view (schematic view) taken in the width direction perpendicular to the longitudinal direction at the neck portion of the elastic-body holder with the O-ring attached to the annular groove portion, in a state where the elastic-body holder is inserted into a paste storage chamber of the syringe, in the paste dispenser of the first embodiment, and front and side sectional views (schematic views) of the same.

[FIG. 12A] FIG. 12A is a perspective view of a mixing tip body of the first embodiment.

[FIG. 12B] FIG. 12B is a bottom view of the mixing tip body of the first embodiment.

[FIG. 13] FIG. 13 is a sectional view taken along line XIII-XIII shown in FIG. 12B.

[FIG. 14A] FIG. 14A is a perspective view of a mixer housing of the first embodiment.

[FIG. 14B] FIG. 14B is a bottom view of the mixer housing of the first embodiment.

[FIG. 15] FIG. 15 is a sectional view taken along line XV-XV shown in FIG. 14B.

[FIG. 16A] FIG. 16A is a front view of a mixer external body of the first embodiment.

[FIG. 16B] FIG. 16B is a plan view of the mixer external body of the first embodiment.

[FIG. 16C] FIG. 16C is a bottom view of the mixer external body of the first embodiment.

[FIG. 17] FIG. 17 is a sectional view taken along line XVII-XVII shown in FIG. 16B.

[FIG. 18] FIG. 18 is a sectional view taken along line XVIII-XVIII shown in FIG. 16A.

[FIG. 19A] FIG. 19A is a perspective view of a cap inside member of the first embodiment.

[FIG. 19B] FIG. 19B is a bottom view of the cap inside member of the first embodiment.

[FIG. 20] FIG. 20 is a sectional view taken along line XX-XX shown in FIG. 19B.

[FIG. 21A] FIG. 21A is a front view of a cap external body of the first embodiment.

[FIG. 21B] FIG. 21B is a plan view of the cap external body of the first embodiment.

[FIG. 21C] FIG. 21C is a bottom view of the cap external body of the first embodiment.

[FIG. 22] FIG. 22 is a sectional view taken along line XXII-XXII shown in FIG. 21B.

[FIG. 23] FIG. 23 is a sectional view taken along line XXIII-XXIII shown in FIG. 21A.

[FIG. 24] FIG. 24 is a view showing a condition of a stage prior to fixing the static mixer over the syringe in the paste dispenser of the first embodiment.

[FIG. 25] FIG. 25 is a bottom view of the static mixer after only the mixer external body is rotated in the paste dispenser of the first embodiment.

[FIG. 26] FIG. 26 is an exploded perspective view of a paste dispenser of a second embodiment.

[FIG. 27] FIG. 27 is a sectional view, which is taken in the width direction at a position passing through a central axis extending in the longitudinal direction, of a static mixer fixed to a tip end portion of a syringe of the second embodiment.

[FIG. 28A] FIG. 28A is a perspective view of the tip end portion of the syringe of the second embodiment.

[FIG. 28B] FIG. 28B is a plan view of the syringe of the second embodiment.

[FIG. 28C] FIG. 28C shows a major portion in a cross-section taken along line XXVIII-XXVIII shown in FIG. 28B.

[FIG. 29A] FIG. 29A is a perspective view of a mixing tip body of the second embodiment.

[FIG. 29B] FIG. 29B is a bottom view of the mixing tip body of the second embodiment.

[FIG. 29C] FIG. 29C is a sectional view taken along line XXIX-XXIX shown in FIG. 29B.

[FIG. 30A] FIG. 30A is a perspective view of a mixer housing of the second embodiment.

[FIG. 30B] FIG. 30B is a sectional view taken along line XXX-XXX shown in FIG. 30A.

[FIG. 31A] FIG. 31A is a front view of a mixer external body of the second embodiment.

[FIG. 31B] FIG. 31B is a side view of the mixer external body of the second embodiment.

[FIG. 31C] FIG. 31C is a plan view of the mixer external body of the second embodiment.

[FIG. 31D] FIG. 31D is a bottom view of the mixer external body of the second embodiment.

[FIG. 31E] FIG. 31E is a sectional view taken along line XXXIE-XXXIE shown in FIG. 31C.

[FIG. 31F] FIG. 31F is a sectional view taken along line XXXIF-XXXIF shown in FIG. 31C.

[FIG. 31G] FIG. 31G is a sectional view taken along line XXXIG-XXXIG shown in FIG. 31A.

[FIG. 32A] FIG. 32A is a front view of a cap external body of the second embodiment.

[FIG. 32B] FIG. 32B is a side view of the cap external body of the second embodiment.

[FIG. 32C] FIG. 32C is a plan view of the cap external body of the second embodiment.

[FIG. 32D] FIG. 32D is a bottom view of the cap external body of the second embodiment.

[FIG. 32E] FIG. 32E is a sectional view taken along line XXXIIE-XXXIIE shown in FIG. 32C.

[FIG. 32F] FIG. 32F is a sectional view taken along line XXXIIF-XXXIIF shown in FIG. 32C.

[FIG. 32G] FIG. 32G is a sectional view taken along line XXXIIG-XXXIIG shown in FIG. 32A.

[Detailed Description of Embodiments]

In the following, embodiments of the static mixer and the paste dispenser according to the present invention will be described based on the first and second embodiments shown in the drawings.

(First Embodiment)

<Overall Configuration>

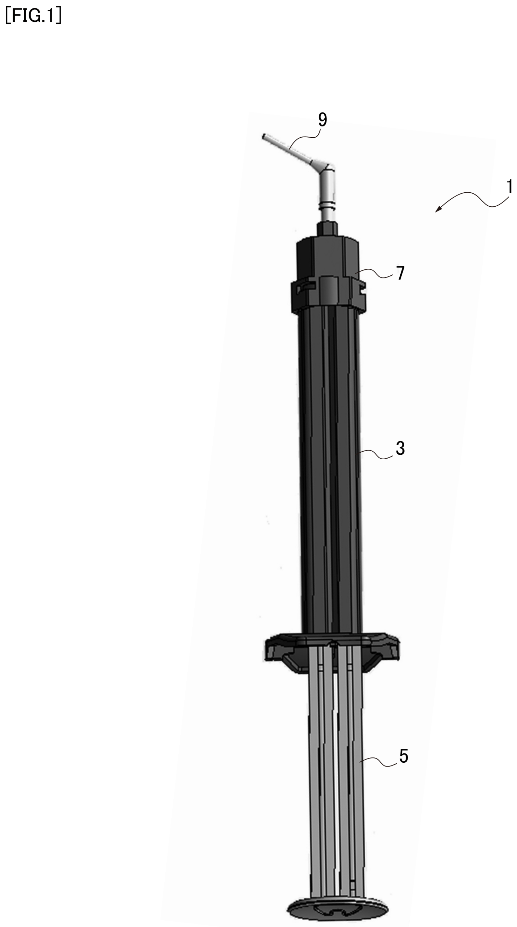

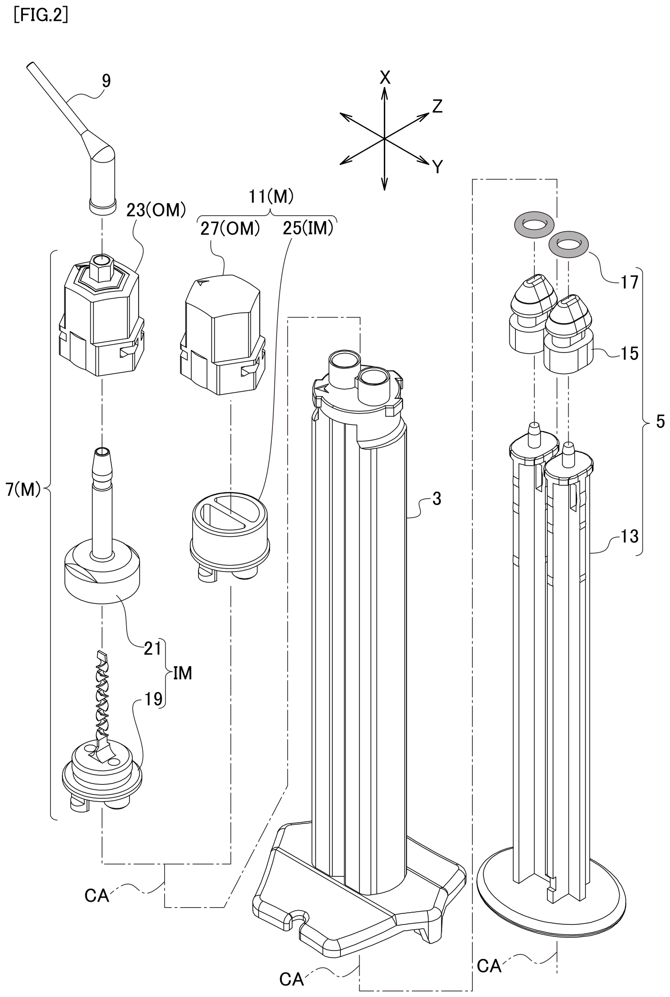

FIG. 1 is a perspective view of a paste dispenser 1 including a static mixer 7 of the first embodiment. FIG. 2 is an exploded perspective view of the paste dispenser 1 of the first embodiment. In the first embodiment, as shown in FIG. 2, the longitudinal direction (X), the width direction (Y) and the thickness direction (Z) are defined with respect to the paste dispenser 1.

As shown in FIG. 1, the paste dispenser 1 includes a syringe 3, a plunger 5, a static mixer 7, and a guide tip 9. The paste dispenser 1 of the first embodiment is configured to inject two types of pastes, which are individually filled in the syringe 3, into a desired position (affected area, tooth covering, etc.) via the guide tip 9, while the plunger 5 pushes them out and the static mixer 7 mixes them together just before use to prepare a dental material. The guide tip 9 is a nozzle member that is fixedly fitted on the static mixer 7 as needed. The paste dispenser 1 is usable even without fitting the guide tip 9 on the static mixer 7.

During storage and transportation of the paste dispenser 1, in place of the static mixer 7, a cap 11 shown in FIG. 2 is fixed to a tip end portion of the syringe 3 (one end portion 41A of the syringe body 41, which is described later). In the present specification, both of the static mixer 7 and the cap 11, which are detachably attached to the tip end portion of the syringe 3 (one end portion 41A of the syringe body 41), are referred to as attachment members M. The syringe 3, the plunger 5, and the attachment member M (static mixer 7 or cap 11) extend in the longitudinal direction X shown in FIG. 2 and they are assembled with the central axis CA passing through the centers of the respective members aligned.

The syringe 3 is distributed in a condition that its interior is filled in advance with pastes and that the plunger 5 is inserted thereinto. The plunger 5 includes a plunger body 13, an elastic-body holder 15 that is in a loose engagement with the tip of the plunger body 13, and an annular O-ring (elastic body) 17 that is attached to the elastic-body holder 15. Here, the loose engagement means an engagement with an engagement force to the extent that the elastic-body holder 15 is disengaged from the plunger body 13 by the frictional force between the syringe 3 and the O-ring 17. The elastic-body holder 15 and the O-ring 17 form a tip end portion of the plunger 5. The plunger 5 may be in one piece that is not separated into the plunger body 13 and the elastic-body holder 15. In this case, the annular O-ring 17 may be directly attached to the tip end portion of the plunger 5.

The static mixer 7 includes a mixing tip body 19, a mixer housing 21, and a mixer external body 23.

The cap 11 includes a cap inside member 25 and a cap external body 27.

[Paste Flow Passage]

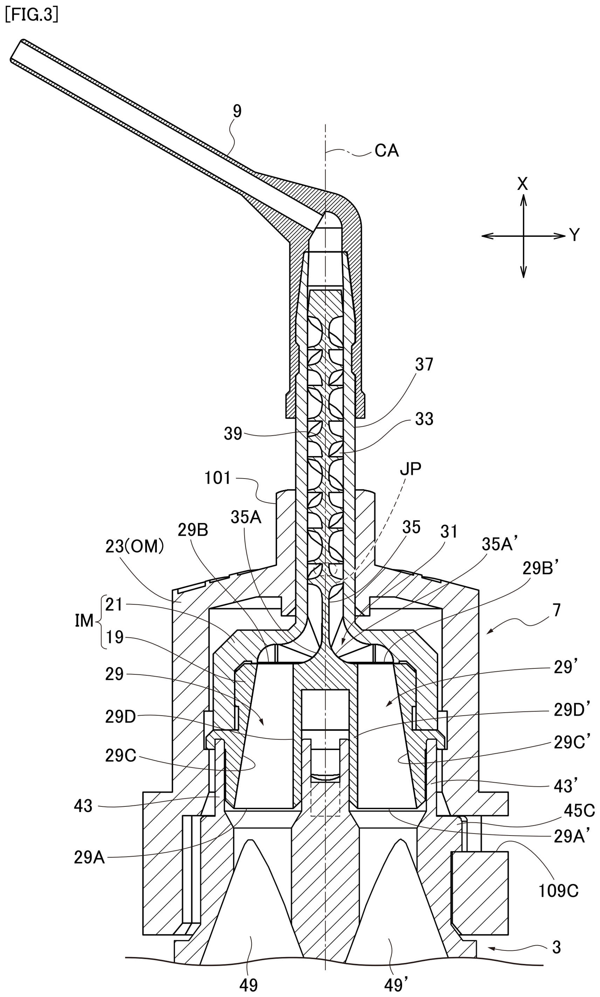

FIG. 3 is a sectional view, which is taken in the width direction Y at a position passing through the central axis CA extending in the longitudinal direction X, of the static mixer 7 fixed to a tip end portion of the syringe 3.

A paste flow passage is formed in the static mixer 7 by the mixing tip body 19 and the mixer housing 21. In the first embodiment, the paste flow passage includes a paste passage 29 and a paste passage 29', an intermediate passage 31, and a mixing passage 33. The paste passages 29, 29' are arranged circumferentially about the central axis CA and are symmetrically disposed along the width direction Y. Each of the paste passages extends in the longitudinal direction X. The mixing passage 33 is located downstream of the paste passages 29, 29' in the paste flow direction and extends along the central axis CA which extends in the longitudinal direction X. The intermediate passage 31 is configured to connect the paste passages 29, 29' and the mixing passage 33.

The paste passage 29 is configured to allow the paste discharged from a paste storage chamber 49 of the syringe 3 to flow therethrough. The paste passage 29 includes an inflow hole 29A through which the paste flows in and an outflow hole 29B through which the paste flows out. The paste passage 29 is formed in the mixing tip body 19. The inflow hole 29A includes an opening area that is larger than that of the outflow hole 29B. Furthermore, an opening center point of the outflow hole 29B is closer to the central axis CA than that of the inflow hole 29A.

An inner circumferential surface of the paste passage 29 includes a tapered portion in a distal surface 29C away from the central axis CA, when viewed in a cross-section perpendicular to the thickness direction Z. The tapered portion of the distal surface 29C in the first embodiment is formed in a tapered shape gradually approaching the central axis CA from the inflow hole 29A toward the outflow hole 29B. In other words, the tapered portion of the first embodiment extends in an inclined manner at a constant angle from the inflow hole 29A to the outflow hole 29B. In the inner circumferential surface of the paste passage 29, a proximal surface 29D, which is close to the central axis CA when viewed in the cross-section perpendicular to the thickness direction Z, extends in parallel with the central axis CA from the inflow hole 29A to the outflow hole 29B to be along the central axis CA. Therefore, the area of a cross-section perpendicular to the central axis CA (longitudinal direction X) of the paste passage 29 in the first embodiment decreases gradually at a constant rate from the inflow hole 29A to the outflow hole 29B.

The paste passage 29' is configured to allow the paste discharged from a paste storage chamber 49' of the syringe 3 to flow therethrough. Since the paste passage 29' has the same configuration as that of the paste passage 29, the prime mark (') is added to the reference numerals of each part of the paste passage 29, and the explanation is omitted.

The paste passages 29, 29' are formed to have the same size and a symmetric shape with respect to the central axis CA in the width direction Y. In other words, the inflow holes 29A, 29A' are set to include the same opening area, and the outflow holes 29B, 29B' are set to include the same opening area. The distance from the central axis CA to the center of the inflow hole 29A when viewed along the central axis CA is the same as that from the central axis CA to the inflow hole 29A'. The distance from the central axis CA to the center of the outflow hole 29B when viewed along the central axis CA is the same as that from the central axis CA to the outflow hole 29B'. The angle of inclination of the distal surface 29C relative to the central axis CA is the same as that of the distal surface 29C' relative to the central axis CA.

The intermediate passage 31 is configured to guide the pastes discharged from the outflow holes 29B, 29B' to a junction position JP. In the first embodiment, a backflow prevention wall 35 is provided between the outflow holes 29B, 29B'. The backflow prevention wall 35 divides the intermediate passage 31 into the outflow hole 29B side and the outflow hole 29B' side. The backflow prevention wall 35 prevents the paste discharged from one of the outflow holes 29B (29B') from flowing into the other outflow hole 29B' (29B). The backflow prevention wall 35 rises from an end surface of the mixing tip body 19, which is formed with the outflow holes 29B, 29B', and extends along the central axis CA to the junction position JP. The backflow prevention wall 35 includes, at its root portion, curved surfaces 35A, 35A' that direct the pastes toward the junction position JP.

The mixing passage 33 is configured to allow the pastes merged at the junction position JP to pass therethrough while the pastes are mixed therein. The mixing passage 33 extends along the central axis CA extending in the longitudinal direction X. The mixing passage 33 includes a cylindrically extending element housing portion 37 of the mixer housing 21, and an element group 39 that extends from an end portion of the backflow prevention wall 35 and is inserted into the element housing portion 37.

[Fixation of Attachment Member]

The static mixer 7 or the cap 11 as the attachment member M is detachably attached to the tip end portion of the syringe 3 (one end portion 41A of the syringe body 41). The fixation structure is described below.

Here, the attachment member M includes an inside member IM and an external body OM. When the attachment member M is the static mixer 7, the mixing tip body 19 and the mixer housing 21 constitute the inside member IM and the mixer external body 23 constitutes the external body OM. When the attachment member M is the cap 11, the cap inside member 25 constitutes the inside member IM and the cap external body 27 constitutes the external body OM.

In the static mixer 7, the mixing tip body 19 and the mixer housing 21 (inside member IM) are arranged inside the mixer external body 23 (external body OM). The mixing tip body 19 and the mixer housing 21 are configured to be rotatable relative to the mixer external body 23 about the central axis CA within a predetermined angular range. Similarly, in the cap 11, the cap inside member 25 (inside member IM) is arranged inside the cap external body 27 (external body OM). The cap inside member 25 is configured to be rotatable relative to the cap external body 27 about the central axis CA within a predetermined angular range.

When the tip end portion of the syringe 3 (one end portion 41A of the syringe body 41) is inserted into the external body OM via the inside member IM along the central axis CA, the inside member IM becomes non-rotatable relative to the syringe 3, but the external body OM is rotatable relative to the syringe 3. In this condition, when the external body OM rotates about the central axis CA, only the external body OM rotates relative to the syringe 3, and the attachment member M is fixed to the tip end portion of the syringe 3 (one end portion 41A of the syringe body 41) via an engagement structure.

The engagement structure includes three or more engagement pairs (three pairs in the first embodiment). Each engagement pair is formed of an engaging portion 45 provided on the syringe 3 and an engaged portion 107 provided on the mixer external body 23 as the external body OM, or of the engaging portion 45 provided on the syringe 3 and an engaged portion 129 provided on the cap external body 27 as the external body OM. The detailed configurations of the engaging portion 45, the engaged portion 107, and the engaged portion 129 are described below.

<Details of Each Member>

[Syringe]

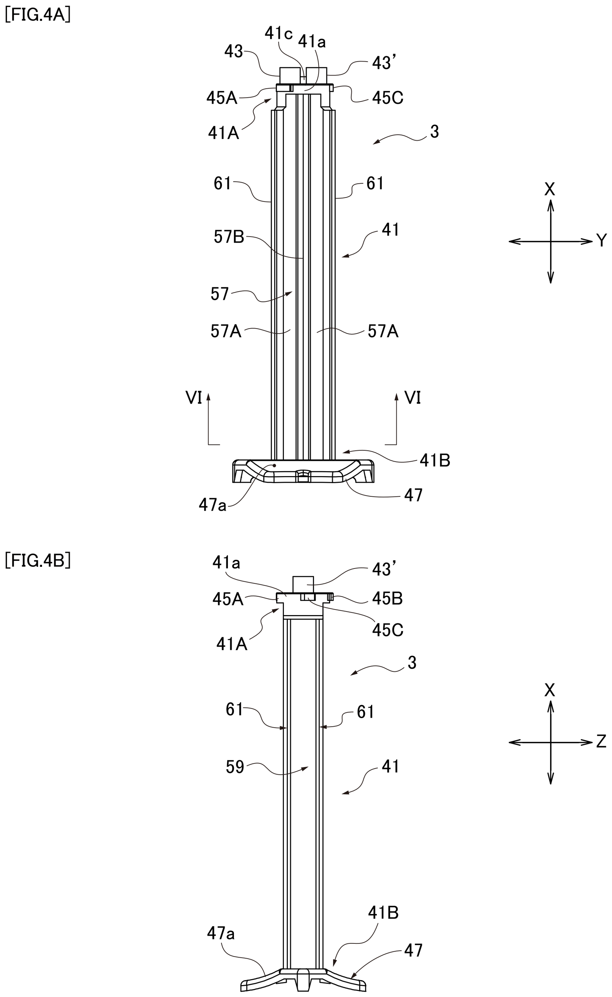

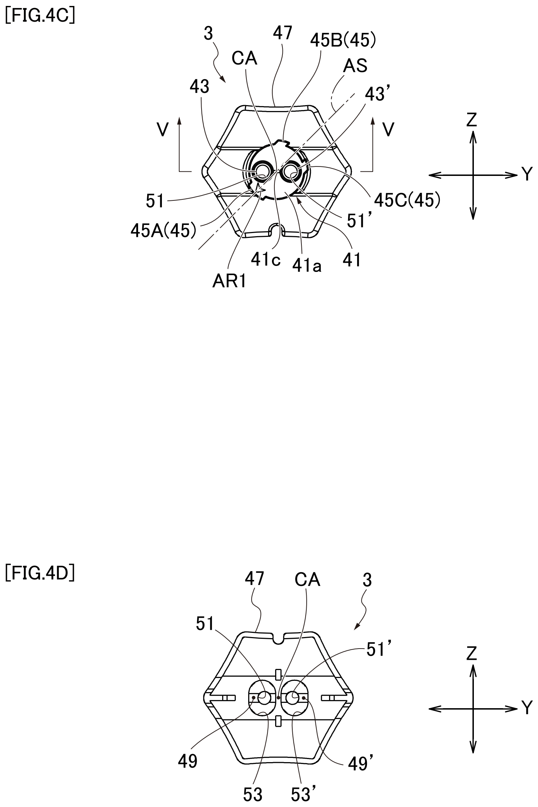

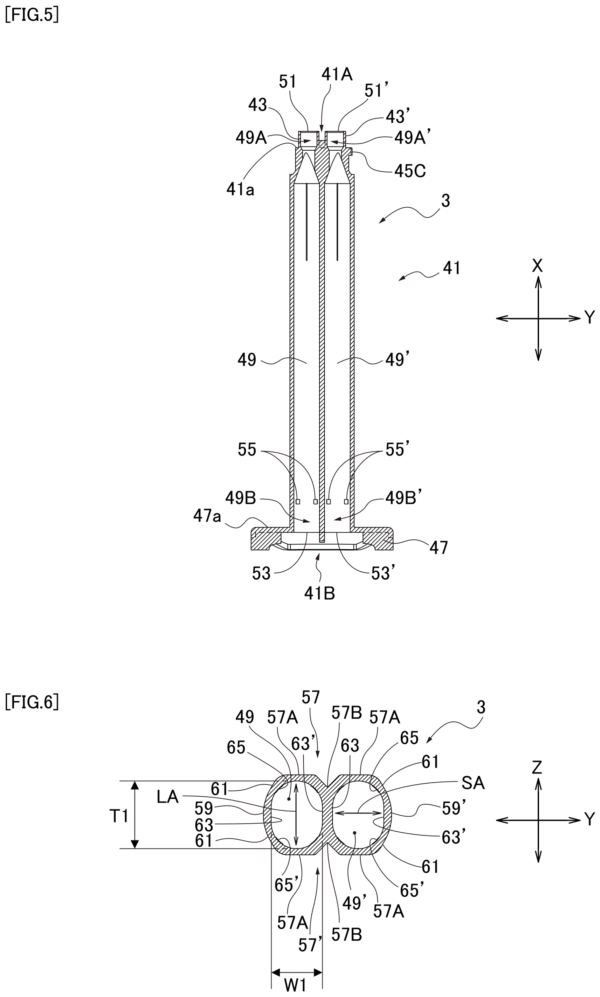

FIG. 4A is a front view of the syringe 3. FIG. 4B is a side view of the syringe 3. FIG. 4C is a plan view of the syringe 3. FIG. 4D is a bottom view of the syringe 3. FIG. 5 is a sectional view taken along line V-V shown in FIG. 4C. FIG. 6 is a sectional view taken along line VI-VI shown in FIG. 4A.

The syringe 3 is a tubular body extending in the longitudinal direction X. The syringe 3 includes the syringe body 41, two projection portions 43, 43', the engaging portions 45, and a fingerhold 47.

The syringe body 41 includes a plurality (two in this case) of the paste storage chambers 49, 49' that store pastes. The two paste storage chambers 49, 49' are aligned along the width direction Y inside the syringe body 41 and have the same shape. The syringe body 41 includes a circular wall portion 41a at its one end portion 41A and the fingerhold 47 at the other end portion 41B. The circular wall portion 41a has a circular cross-sectional shape taken along the width direction Y perpendicular to the longitudinal direction X.

The two projection portions 43, 43' are cylindrical portions that project in the longitudinal direction X from the one end portion 41A (circular wall portion 41a) of the syringe body 41, and their tip ends become discharge ports 51, 51', respectively. An inner circumferential portion of the projection portion 43 constitutes a part of the paste storage chamber 49, and an inner circumferential portion of the projection portion 43' constitutes a part of the paste storage chamber 49'. The two projection portions 43, 43' are connected together via a rising wall 41c that rises from the circular wall portion 41a, and their inclinations are restricted.

The engaging portion 45 constitutes the engagement structure for fixing the attachment member M to the tip end portion of the syringe 3 (one end portion 41A of the syringe body 41) and engages with the engaged portion (engaged portion 107 and engaged portion 129) of the attachment member M (static mixer 7 and cap 11). In the first embodiment, as shown in FIG. 4C, the engaging portions 45 include three projection pieces 45A, 45B, 45C formed on an outer circumferential surface of the circular wall portion 41a of the syringe body 41.

The projection pieces 45A, 45B, 45C are aligned along the rotation direction of the external body OM and are non-point symmetrical when viewed along the central axis CA and when the central axis CA corresponding to the rotation center of the external body OM is determined as the central point. Note that "point symmetry" generally means that, when a figure is rotated 180 degrees around the symmetry point, it is brought onto the original figure, but "non-point symmetry" here means that, when the syringe 3 is rotated around the central axis CA as the central point, the projection pieces 45A, 45B, 45C do not overlap each other except when it is rotated 360 degrees.

In the first embodiment, the projection pieces 45A, 45B, 45C are aligned at non-equal intervals along the rotation direction of the external body OM. The distance in the rotation direction from the projection piece 45A to the projection piece 45B is equal to that from the projection piece 45A to the projection piece 45C. In contrast, the distance in the rotation direction from the projection piece 45B to the projection piece 45C is shorter than each of the distance from the projection piece 45A to the projection piece 45B and that from the projection piece 45A to the projection piece 45C.

Furthermore, the projection pieces 45A, 45B, 45C have different shapes when viewed along the central axis CA. In other words, the length of the projection piece 45A in the rotation direction is longer than the length of each of the projection pieces 45B, 45C in the rotation direction. The projection pieces 45B, 45C are the same in terms of length in the rotation direction, but they are different in terms of the direction of projection from the outer circumferential surface of the circular wall portion 41a.

The projection pieces 45B, 45C have a line symmetrical shape with respect to an axis of symmetry AS passing through the central axis CA and the center point in the circumferential direction of the projection piece 45A. An arrow AR1 indicating the position of the projection piece 45A is engraved on the surface of the circular wall portion 41a.

The fingerhold 47 is a flange-like portion extending from an outer peripheral surface of the other end portion 41B of the syringe body 41 in the width direction Y and the thickness direction Z. As shown in FIGS. 4C and 4D, the fingerhold 47 of the first embodiment has a generally hexagonal outer peripheral shape. Emboss processing may be conducted on at least the surface 47a of the fingerhold 47 on the side of the one end portion 41A. Emboss processing on the surface 47a can prevent the fingers from slipping during use and improve the quality of the external appearance by making the gate marks less noticeable.

As shown in FIG. 6, the outer peripheral surface of the syringe body 41 includes a pair of width-direction outer peripheral surfaces 57, 57', a pair of thickness-direction outer peripheral surfaces 59, 59', and four connecting outer peripheral surfaces 61.

Of the outer peripheral surface of the syringe body 41, the pair of width-direction outer peripheral surfaces 57, 57' are opposite to each other in the thickness direction Z. Each of the width-direction outer peripheral surfaces 57, 57' includes flat portions 57A that are flat in the longitudinal direction X and the width direction Y. Each of the width-direction outer peripheral surface 57, 57' includes a groove-shaped recess portion 57B that is recessed in the flat portions 57A. The recess portion 57B is positioned between the two paste storage chambers 49, 49' formed inside the syringe body 41. The flat portion 57A is divided into two along the width direction by the recess portion 57B. The recess portion 57B has a wedge-shaped cross-section in which the length in the width direction Y narrows gradually as it deepens.

Of the outer peripheral surface of the syringe body 41, the pair of thickness-direction outer peripheral surfaces 59, 59' are opposite to each other in the width direction Y. The thickness-direction outer peripheral surfaces 59, 59' are curved outward in the width direction Y with a predetermined radius of curvature, and are set to a curved surface of R5 in this embodiment.

Of the outer peripheral surface of the syringe body 41, the connecting outer peripheral surfaces 61 are respectively set between the width-direction outer peripheral surface 57 and the thickness-direction outer peripheral surface 59, between the width-direction outer peripheral surface 57' and the thickness-direction outer peripheral surface 59, between the width-direction outer peripheral surface 57 and the thickness-direction outer peripheral surface 59', and between the width-direction outer peripheral surface 57' and the thickness-direction outer peripheral surface 59'. The connecting outer peripheral surfaces 61 are curved with a predetermined radius of curvature (for example, radius of curvature R1 to R5; R1.5 in the first embodiment) and achieve smooth connections respectively between the width-direction outer peripheral surface 57 and the thickness-direction outer peripheral surface 59, between the width-direction outer peripheral surface 57' and the thickness-direction outer peripheral surface 59, between the width-direction outer peripheral surface 57 and the thickness-direction outer peripheral surface 59', and between the width-direction outer peripheral surface 57' and the thickness-direction outer peripheral surface 59'. In the first embodiment, the connecting outer peripheral surfaces 61 and the pair of thickness-direction outer peripheral surfaces 59, 59' are formed by combining a plurality of curved surfaces set to different radii of curvature. The connecting outer peripheral surfaces 61 and the pair of thickness-direction outer peripheral surfaces 59, 59' may be formed by curved surfaces set to the same radius of curvature.

The paste storage chamber 49 includes, at one end portion 49A (projection portion 43), the discharge port 51 that opens one end of the paste storage chamber 49 and discharges the paste pushed out by the plunger 5, and includes, at the other end portion 49B, a filling port 53 that opens the other end of the paste storage chamber 49. The paste storage chamber 49 has, at the one end portion 49A, a tapered shape that receives the tip end portion of the plunger 5 inserted into the paste storage chamber 49 (top portion 83 of the elastic-body holder 15). The inner circumferential surface of the other end portion 49B includes detent projections 55 that prevent the plunger 5 inserted into the paste storage chamber 49 from coming off. Since the paste storage chamber 49' has the same configuration as that of the paste storage chamber 49, the same reference numeral as that for each part of the paste storage chamber 49 is used, and the explanation is omitted.

As shown in FIG. 6, when the paste storage chamber 49 is sectioned in a direction perpendicular to the longitudinal direction X, the sectional shape becomes an elliptical shape having its long axis direction LA along the thickness direction Z and its short axis direction SA along the width direction Y. This elliptical shape refers to a concept including not only elliptical shapes defined in geometry, but also shapes near elliptical shapes, such as oval shapes (oval, a shape obtained by connecting two semicircles by two straight lines), elliptical arch shapes (shapes obtained by cutting off a portion of ellipses by a straight line), flat ellipses (shapes obtained by flattening ellipses in the long or short axis direction), certain oval shapes, etc. In the first embodiment, the inner circumferential surface of the paste storage chamber 49 includes a pair of inner flat surface portions 63, 63' that are flat in the longitudinal direction X and the thickness direction Z, and a pair of inner curved surface portions 65, 65' that are curved with a predetermined radius of curvature.

The pair of inner flat surface portions 63, 63' are opposed to each other along the width direction Y across the inner space of the paste storage chamber 49. The pair of inner curved surface portions 65, 65' are opposed to each other in the thickness direction Z across the inner space of the paste storage chamber 49 and are smoothly connected with the pair of inner flat surface portions 63, 63'. As a result, in the first embodiment, the sectional shape of the inner circumferential surface of the paste storage chamber 49 turns into a flat ellipse.

In the first embodiment, the length T1 in the long axis direction of the elliptical shape of the inner circumferential surface of the paste storage chamber 49 is preferably in a range of 1.1 to 2.0 when the length W1 in the short axis direction SA is 1. In the first embodiment, the length T1 in the long axis direction LA is set at 1.3 when the length W1 in the short axis direction SA is 1. It is preferable that the length T1 in the long axis direction LA is specifically from 5 mm to 20 mm and that the length W1 in the short axis direction SA is from 4.5 mm to 10 mm.

[Plunger Body]

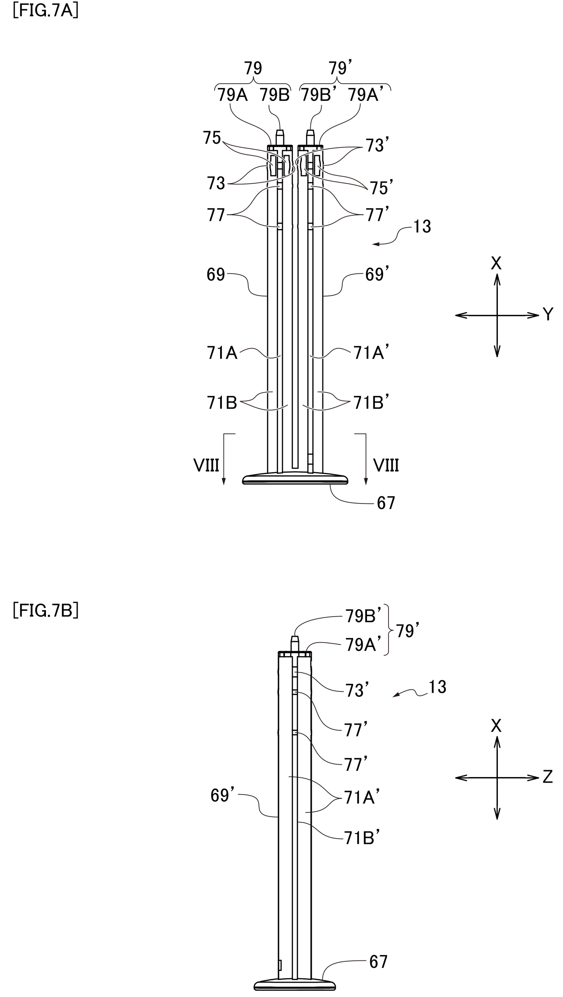

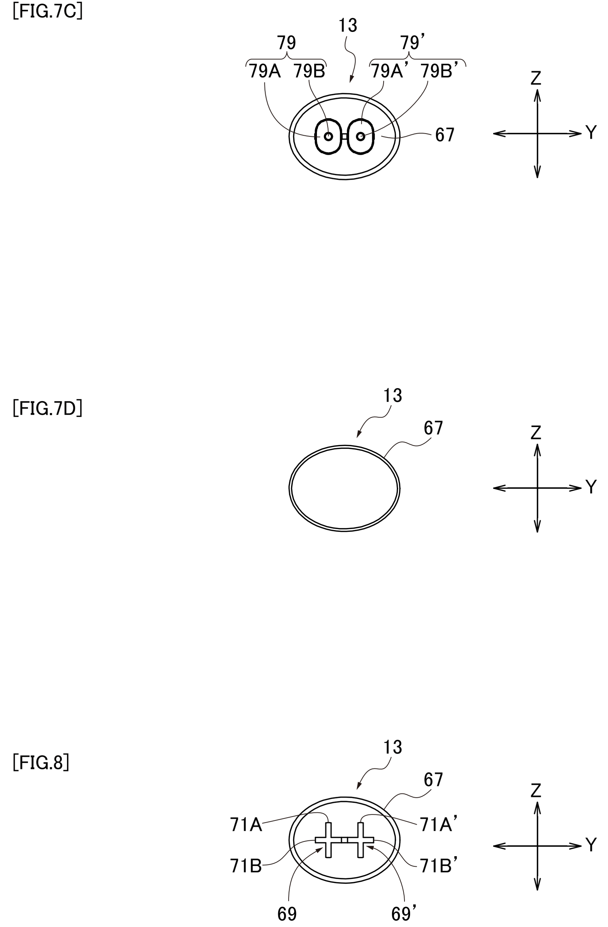

FIG. 7A is a front view of the plunger body 13. FIG. 7B is a side view, FIG. 7C is a plan view, and FIG. 7D is a bottom view. FIG. 8 is a sectional view taken along line VIII-VIII shown in FIG. 7A.

The plunger body 13 includes a pressing portion 67 and two rod-shaped portions 69, 69'.

The pressing portion 67 is configured such that the user presses it with a digit (e.g., thumb) to push the plunger 5 into the syringe 3 while holding the syringe 3 between two fingers (e.g., index and middle fingers) and putting the fingers on the fingerhold 47. As shown in FIG. 7D, the pressing portion 67 has an elliptical shape with an outer circumferential shape elongated in the width direction. The two rod-shaped portions 69, 69' are disposed in the center portion of the pressing portion. The pressing portion 67 is curved at its bottom surface in a direction where the rod-shaped portion 69, 69' extend so that the user can easily press it with his/her digit.

The rod-shaped portions 69, 69' extend from the pressing portion 67 in parallel along the longitudinal direction X. In the first embodiment, the rod-shaped portions 69, 69' are aligned at a predetermined interval therebetween along the long axis direction (width direction Y) of the pressing portion 67 and are simultaneously inserted into the paste storage chambers 49, 49'. The rod-shaped portions 69, 69' have the same shape and are insertable into the paste storage chamber 49, 49'. In other words, when the rod-shaped portion 69 is inserted into the paste storage chamber 49, the rod-shaped portion 69' is inserted into the paste storage chamber 49'. When the rod-shaped portion 69 is inserted into the paste storage chamber 49', the rod-shaped portion 69' is inserted into the paste storage chamber 49.

As shown in FIG. 8, the rod-shaped portion 69 has a cross shape in its cross-section in the width direction Y which is formed by a combination of a thickness-direction wall portion 71A extending in the thickness direction Z and a width-direction wall portion 71B extending in the width direction Y. The length in the thickness direction Z of the thickness-direction wall portion 71A is greater than that in the width direction Y of the width-direction wall portion 71B. When the rod-shaped portion 69 is inserted into the paste storage chamber 49 (49'), tips of the thickness-direction wall portion 71A move along the inner curved surface portions 65, 65' of the paste storage chamber 49 (49'), and tips of the width-direction wall portion 71B move along the inner flat surface portions 63, 63' of the paste storage chamber 49 (49').

One end portion in the longitudinal direction X of the width-direction wall portion 71B includes a pair of projection portions 73, 73, which project in the width direction Y, and a pair of cut-out portions 75, 75. As a result, when the rod-shaped portion 69 is inserted into the paste storage chamber 49 (49'), the width-direction wall portion 71B comes into contact at its pair of projection portions 73, 73 with the inner flat surface portions 63, 63', and is bent at the portion where the pair of cut-out portions 75, 75 are formed. Thus, the rod-shaped portion 69 is positioned in the width direction Y, thereby preventing play. Similarly, for the purpose of preventing play of the rod-shaped portion 69, the thickness-direction wall portion 71A and the width-direction wall portion 71B are formed with a plurality of projection portions 77.

The rod-shaped portion 69 includes, at its tip, a holder engagement portion 79 that is configured to loosely engage with the elastic-body holder 15. The holder engagement portion 79 includes a tip wall portion 79A and an engaging projection 79B. The tip wall portion 79A contacts a bottom surface 81A of the elastic-body holder 15. The engaging projection 79B extends from the tip wall portion 79A in the longitudinal direction X and is inserted into an engaged hole 81B formed in the bottom surface 81A of the elastic-body holder 15. As shown in FIG. 7C, the outer circumferential shape of the tip wall portion 79A is an elliptical shape along the sectional shape of the paste storage chamber 49 (49'). When the rod-shaped portion 69 is inserted into the paste storage chamber 49 (49') and the projection portions 73, 73 and 77 pass over the detent projections 55 (55'), the detent projections 55 (55') are caught on portions such as the projection portion 73, thereby preventing the plunger 5 from coming off.

Since the rod-shaped portion 69' has the same configuration as that of the rod-shaped portion 69, the prime (') is added to the reference numeral of each part of the rod-shaped portion 69, and the explanation is omitted.

[Elastic-body Holder]

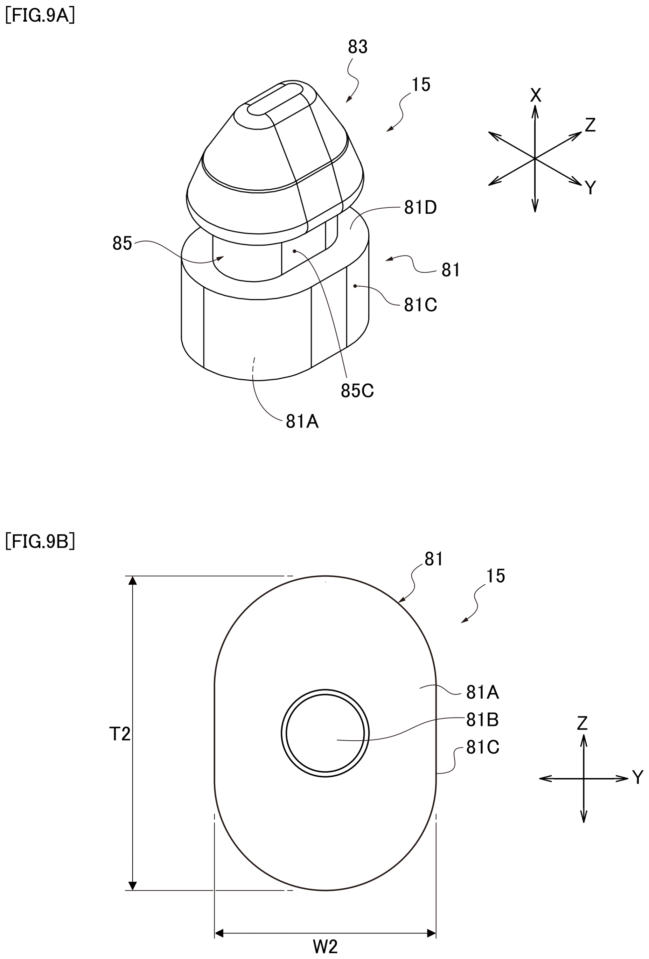

FIG. 9A is a perspective view of the elastic-body holder 15, and FIG. 9B is a bottom view thereof.

The elastic-body holders 15 are loosely engaged one by one with the holder engagement portions 79, 79' at the tip of the plunger body 13 to constitute the tip end portion of the plunger 5. The elastic-body holder 15 includes a body 81, a top portion 83, and a neck portion 85. The body 81 is a portion with an elliptical shape in the sectional shape in the width direction Y. The bottom surface 81A of the body 81 includes the engaged hole 81B that receives the engaging projection 79B of the holder engagement portion 79 or the engaging projection 79B' of the holder engagement portion 79'. An outer circumferential surface 81C of the body 81 has an elliptical shape along the elliptical shape of the inner circumferential surface (inner flat surface portions 63, 63' and inner curved surface portions 65, 65') of the paste storage chamber 49 (49'). The top portion 83 has a shape that is tapered toward the tip. The neck portion 85 is an elliptical shape portion formed between the body 81 and the top portion 83. An annular groove portion 81D is formed by the neck portion 85, and the body 81 and the top portion 83 which are opposed to each other with the neck portion 85 therebetween. The O-ring is attached to the annular groove portion 81D.

The elliptical shape of the body 81 has a sectional shape that is smaller than and similar to that of the paste storage chamber 49 (49'), and is along the elliptical shape of the inner circumferential surface of the paste storage chamber 49 (49'). Therefore, when the elastic-body holder 15 is inserted into the paste storage chamber 49 (49'), the distance from the outer circumferential surface 81C of the body 81 to the inner circumferential surface of the paste storage chamber 49 (49') becomes constant over the entire circumference of the body 81. In the first embodiment, similar to the paste storage chamber 49 (49'), the length T2 in the long axis direction of the body 81 is preferably in a range of 1.1 to 2.0, when the length W2 in the short axis direction is 1. Specifically, in the first embodiment, the length T2 in the long axis direction is set at 1.3 when the length W2 in the short axis direction is 1.

The elliptical shape of the neck portion 85 is smaller than that of the body 81 and has a sectional shape similar to the elliptical shape of the body 81. In other words, the elliptical shape of the neck portion 85 has a sectional shape similar to that of the paste storage chamber 49 (49'). Therefore, when the elastic-body holder 15 is inserted into the paste storage chamber 49 (49'), the distance from the outer circumferential surface 85C of the neck portion 85 to the inner circumferential surface of the paste storage chamber 49 (49') becomes constant over the entire circumference of the neck portion 85. In the first embodiment, the ratio of the elliptical shape of the neck portion 85 between the length in the long axis direction and that in the short axis direction is set at the same ratio of the elliptical shape of the body 81.

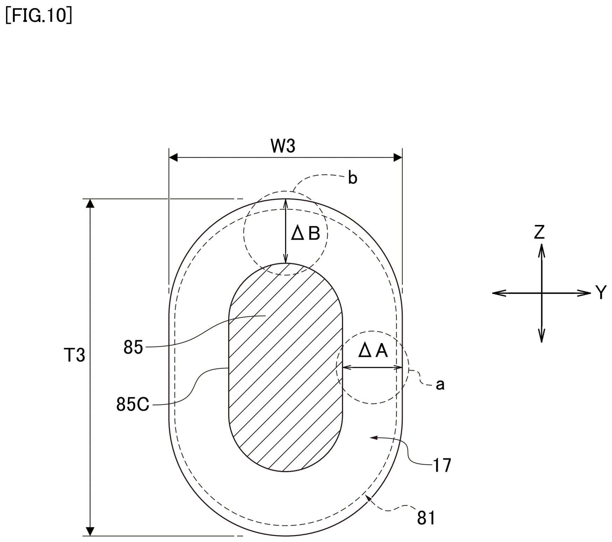

FIG. 10 is a sectional view taken in the width direction Y perpendicular to the longitudinal direction X at the neck portion 85 of the elastic-body holder 15 with the O-ring 17 attached to the annular groove portion 81D. Here, the O-ring 17 has an annular shape, but the neck portion 85 has an elliptical shape. Therefore, when the O-ring 17 is attached to the annular groove portion 81D, it is stretched in the long axis direction (thickness direction Z) to have an elliptical shape. A length T3 in the long axis direction of the O-ring 17 in the elliptical shape is greater than the length T2 in the long axis direction of the elliptical shape of the body 81. In addition, a length W3 in the short axis direction of the O-ring 17 in the elliptical shape is greater than the length W2 in the short axis direction of the elliptical shape of the body 81. Therefore, the O-ring 17 is fixed in a state where it protrudes from the annular groove portion 81D.

In the O-ring 17, a stronger tensile force acts on a region "a" that is stretched in the long axis direction (thickness direction Z) than on a region "b" that is not stretched in the long axis direction (thickness direction Z). As a result, as shown in FIG. 10, a wire diameter ΔA of the O-ring 17 in the region "a" is thinner than a wire diameter ΔB thereof in the region "b". Thus, the O-ring 17 becomes different in wire diameter depending on the circumferential position. The wire diameter of the O-ring 17 refers to the cross-section thickness of the O-ring 17. Due to becoming different in wire diameter depending on the circumferential position, the amount of protrusion of the O-ring 17 from the annular groove portion 81D becomes different. Thus, the amount of protrusion from the annular groove portion 81D becomes smaller in a region (e.g., region "a") where the wire diameter is thinner.

Furthermore, the length T3 in the long axis direction of the elliptically-shaped O-ring 17 is slightly greater than the length T1 in the long axis direction of the elliptical shape of the inner circumferential surface of the paste storage chamber 49 or paste storage chamber 49'. The length W3 in the short axis direction of the elliptically-shaped O-ring 17 is slightly greater than the length W1 in the short axis direction of the elliptical shape of the inner circumferential surface of the paste storage chamber 49 or paste storage chamber 49'. Therefore, when the elastic-body holder 15 is inserted into the paste storage chamber 49 (49') of the syringe 3, the O-ring 17 comes into contact with the inner circumferential surface of the paste storage chamber 49 (49') and is compressed between the inner circumferential surface of the paste storage chamber 49 (49') and the outer circumferential surface 85C of the neck portion 85.

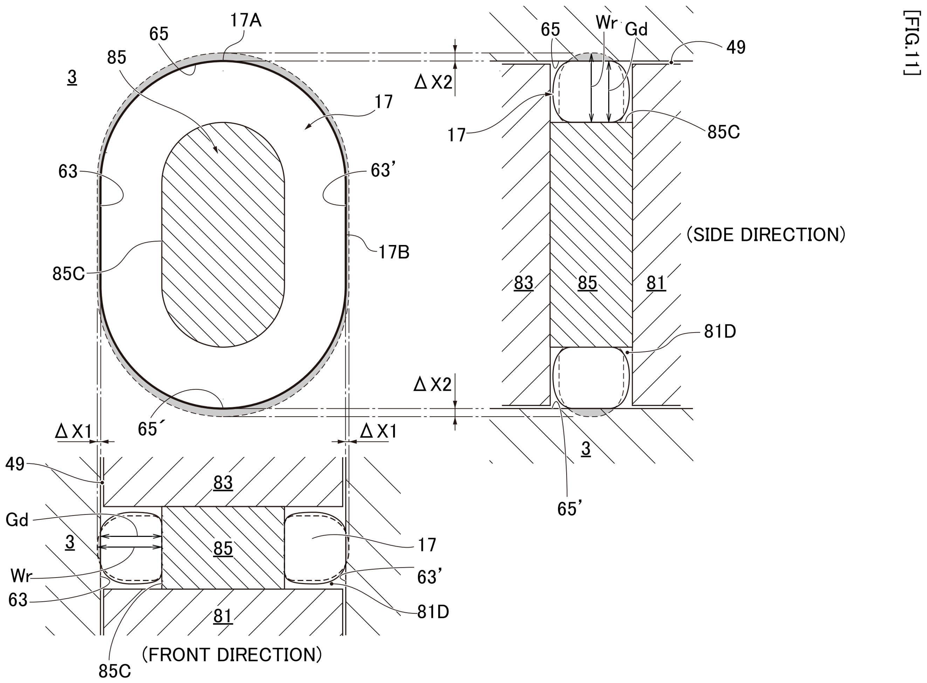

FIG. 11 shows a sectional view (schematic view) taken in the width direction Y perpendicular to the longitudinal direction X at the neck portion 85 of the elastic-body holder 15 with the O-ring 17 attached to the annular groove portion 81D, in a state where the elastic-body holder 15 is inserted into the paste storage chamber 49 of the syringe 3, and front and side sectional views (schematic views) of the same. In FIG. 11, a portion of the O-ring 17 that protrudes from the annular groove portion 81D and then is compressed by its insertion into the paste storage chamber 49 is represented by a gray color, and the state of the O-ring 17 before its compression is shown by a dashed line.

As shown in FIG. 11, when the plunger 5 is inserted into the syringe 3 with the O-ring 17 attached to the annular groove portion 81D, the O-ring 17 is compressed between the inner circumferential surface (inner flat surface portions 63, 63' and inner curved surface portions 65, 65') of the paste storage chamber 49 and the outer circumferential surface 85C of the neck portion 85. Here, the O-ring 17 is different in wire diameter depending on the circumferential position. The amount of protrusion from the annular groove portion 81D becomes smaller in a region where the wire diameter is thinner.

Therefore, as shown in FIG. 11, there is a variation in the magnitude of the difference (ΔX1, ΔX2) between the distance Gd from the outer circumferential surface 85C of the neck portion 85 to the inner circumferential surface of the paste storage chamber 49 and the wire diameter Wr of the O-ring 17, depending on the circumferential position of the O-ring 17. Therefore, the compression ratio of the O-ring 17 at the insertion into the paste storage chamber 49 becomes different depending on the circumferential position.

In other words, the amount of protrusion of the elliptically-shaped O-ring 17 from the annular groove portion 81D is greater in the region "b" with a thicker wire diameter than in the region "a" with a thinner wire diameter. As a result, the difference ΔX2 in the region "b" is greater than the difference ΔX1 in the region "a". Therefore, when inserted into the syringe 3, the O-ring 17 is pushed more toward the interior of the paste storage chamber 49 in the region "b" than in the region "a". Thus, the compression ratio in the region "b" becomes greater than that in the region "a". As a result, the compression ratio in the long axis direction (thickness direction Z) of the elliptically-shaped O-ring 17 becomes greater than that in the short axis direction (width direction Y) of the O-ring 17.

Due to the difference in the compression ratio of the O-ring 17 depending on the circumferential position, there occurs a difference in the frictional force between the O-ring 17 and the inner circumferential surface of the paste storage chamber 49 (49') depending on the circumferential position of the O-ring 17. In other words, the frictional force between a vertex 17A in the long axis direction of the O-ring, which is stretched in an elliptical shape, and the inner circumferential surface of the paste storage chamber 49 (49') becomes greater than that between a vertex 17B in the short axis direction of the O-ring, which is stretched in an elliptical shape, and the inner circumferential surface of the paste storage chamber 49 (49'). Therefore, it is easy to adjust the movability in the longitudinal direction of the plunger 5, while maintaining the sealing property between the inner circumferential surface of the paste storage chamber 49 (49') and the elastic body (O-ring 17), by adjusting the length in the long axis direction of the elliptical shape as the sectional shape of the paste storage chamber 49 (49') and that of the elliptical shape as the sectional shape of the plunger 5 relative to the length in the short axis direction.

It is preferable that the compression ratio in the long axis direction of the O-ring 17 (compression ratio in the region "b") is about 10-14 % and that the compression ratio in the short axis direction thereof (compression ratio in the region "a") is about 3-7 %. Specifically, in the first embodiment, the compression ratio in the long axis direction is 12 %, and the compression ratio in the short axis direction is 5 %.

The compression ratio C (%) is determined by the following formula.

$$C = (Wr - Gd)/Wr \times 100$$

wherein Wr is the wire diameter of the elastic body (O-ring) [mm], and Gd is the distance from the outer circumferential surface of the neck portion to the inner circumferential surface of the paste storage chamber [mm].

The elastic-body holder 15 engages loosely with the holder engagement portions 79 (79') at the tip of the plunger body 13. Therefore, when the elastic-body holder 15 with the O-ring attached thereto, together with the plunger body 13, is inserted into the paste storage chamber 49 (49') of the syringe 3, the elastic-body holder 15 together with the plunger body 13 moves in the longitudinal direction X in the paste storage chamber 49 (49') as the plunger body 13 is pushed in. On the other hand, when the plunger body 13 is pulled back, it is separated from the plunger body 13 and is left in the paste storage chamber 49 (49'). As a result, even if the plunger 5 is accidentally pulled back, air is not drawn into the paste storage chamber 49 (49') from the discharge port 51 (51').

[Static Mixer]

(Mixing Tip Body)

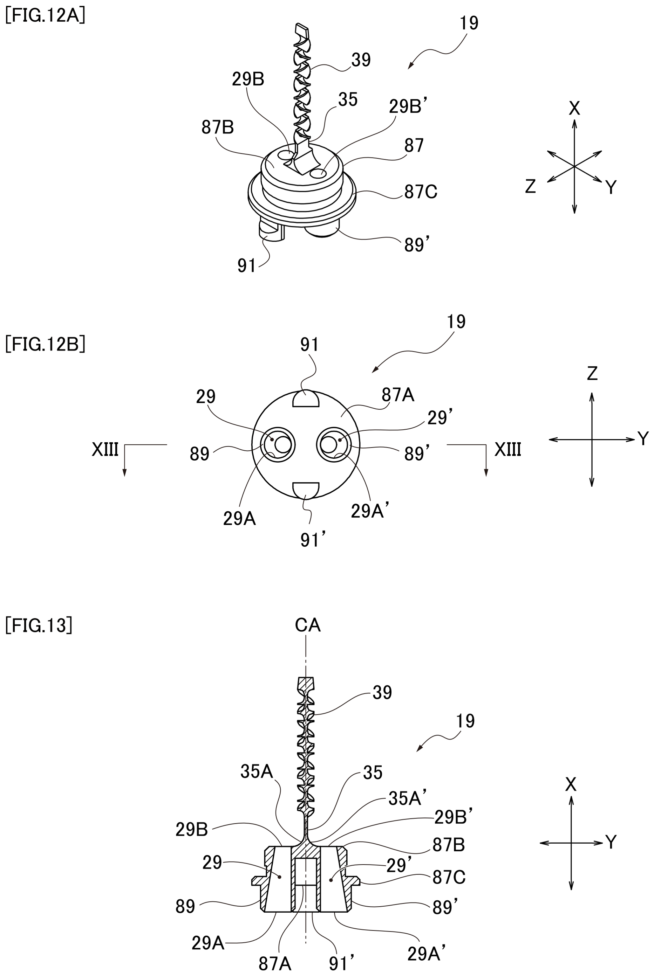

FIG. 12A is a perspective view of the mixing tip body 19, and FIG. 12B is a bottom view thereof. FIG. 13 is a sectional view taken along line XIII-XIII shown in FIG. 12B.

In combination with the mixer housing 21, the mixing tip body 19 constitutes the inside member IM of the static mixer 7 as the attachment member M. The mixing tip body 19 includes a base portion 87, two insertion portions 89, 89', a pair of rotation engaging pieces 91, 91', the backflow prevention wall 35, and the element group 39.

The base portion 87 is a cylindrical portion that fits inside the mixer external body 23 as the external body OM. The base portion 87 is formed at its outer circumferential portion with a flange portion 87C that extends outward in the radial direction. The mixing tip body 19 is rotatably fixed to the mixer external body 23 about the central axis CA, by fitting the flange portion 87C into a groove (circumferential groove 103) formed in the inner circumferential surface of the mixer external body 23, which is described later.

The two insertion portions 89, 89' and the pair of rotation engaging pieces 91, 91' are formed on a first end surface 87A of the base portion 87, which is opposed to the syringe 3, and extend from the first end surface 87A in the longitudinal direction X. When the static mixer 7 is attached to the syringe 3, the two insertion portions 89, 89' are inserted into the two projection portions 43, 43' of the syringe 3, respectively. The insertion portion 89 includes the paste passage 29, and the insertion portion 89' includes the paste passage 29'. The pair of rotation engaging pieces 91, 91' are respectively engageable with engaged grooves (a pair of first engaged grooves 105A, 105A', or a pair of second engaged grooves 105B, 105B') of the mixer external body 23, which is described later.

The backflow prevention wall 35 extends along the central axis CA from a center portion of a second end surface 87B that is opposite the first end surface 87A of the base portion 87. A tip of the backflow prevention wall 35 is at the junction position JP of the pastes, and the element group 39 extends from the tip of the backflow prevention wall. The element group 39 includes a plurality (eight in the first embodiment) of elements aligned along the central axis CA.

The paste passage 29 is formed continuously through the insertion portion 89 and the base portion 87. The inflow hole 29A is formed in an end surface of the insertion portion 89, and the outflow hole 29B is formed in the second end surface 87B of the base portion 87. Similarly, the paste passage 29' is formed continuously through the insertion portion 89' and the base portion 87. The inflow hole 29A' is formed in an end surface of the insertion portion 89', and the outflow hole 29B' is formed in the second end surface 87B of the base portion 87.

(Mixer Housing)

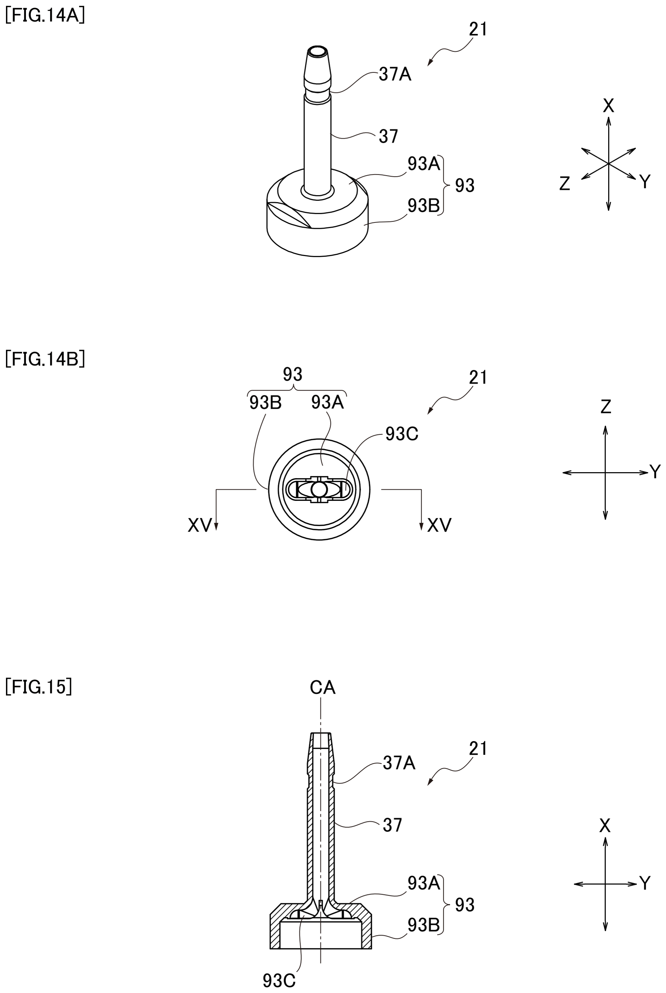

FIG. 14A is a perspective view of the mixer housing 21. FIG. 14B is a bottom view thereof. FIG. 15 is a sectional view taken along line XV-XV shown in FIG. 14B.

In combination with the mixing tip body 19, the mixer housing 21 constitutes the inside member IM of the static mixer 7 as the attachment member M. The mixer housing 21 includes a base housing portion 93 and an element housing portion 37.

When the mixing tip body 19 is covered with the mixer housing 21, the base housing portion 93 includes a circular end wall portion 93A that covers the second end surface 87B of the base portion 87 of the mixing tip body 19, and a peripheral wall portion 93B that rises from a peripheral portion of the end wall portion 93A and surrounds the base portion 87 up to a position where its tip contacts the flange portion 87C.

The end wall portion 93A is formed in its inner wall with a recess 93C in a position opposite the outflow holes 29B, 29B'. When the mixing tip body 19 is covered with the mixer housing 21, the intermediate passage 31, which is delineated by the base portion 87, the backflow prevention wall 35, and the recess 93C, is formed in the inside of the inside member IM (see FIG. 3).

The element housing portion 37 is a cylindrical portion that extends in the longitudinal direction X from a through hole formed at a central portion of the end wall portion 93A of the base housing portion 93 and opens at its tip. When the mixing tip body 19 is covered with the mixer housing 21, the element group 39 is inserted into the element housing portion 37, and the mixing passage 33 is formed. The element housing portion 37 is formed at its outer circumferential portion with a guide-tip engaging groove 37A for fixing the guide tip 9.

(Mixer External Body)

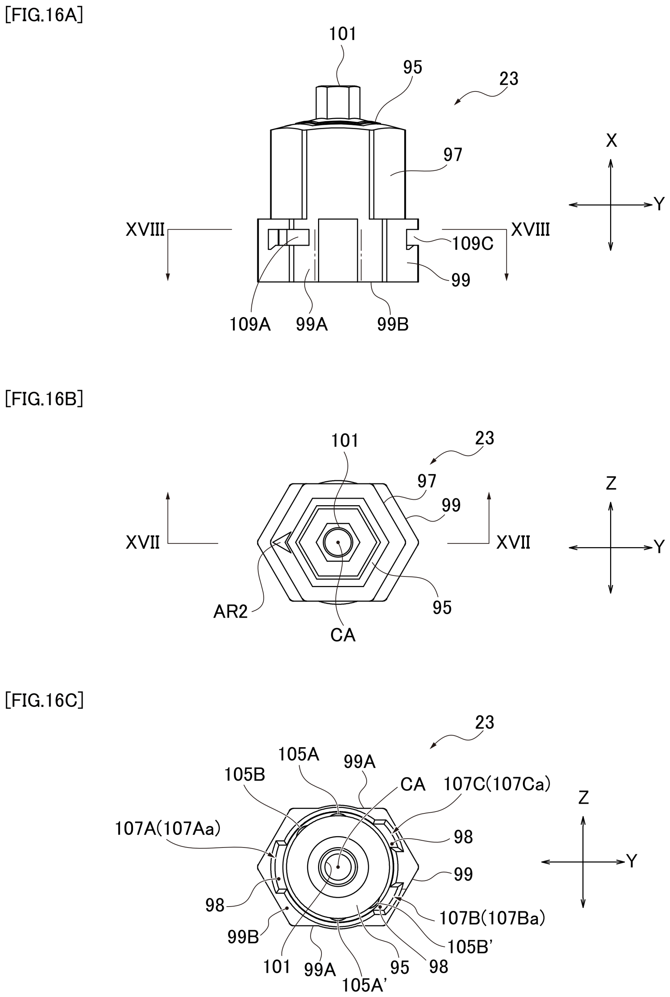

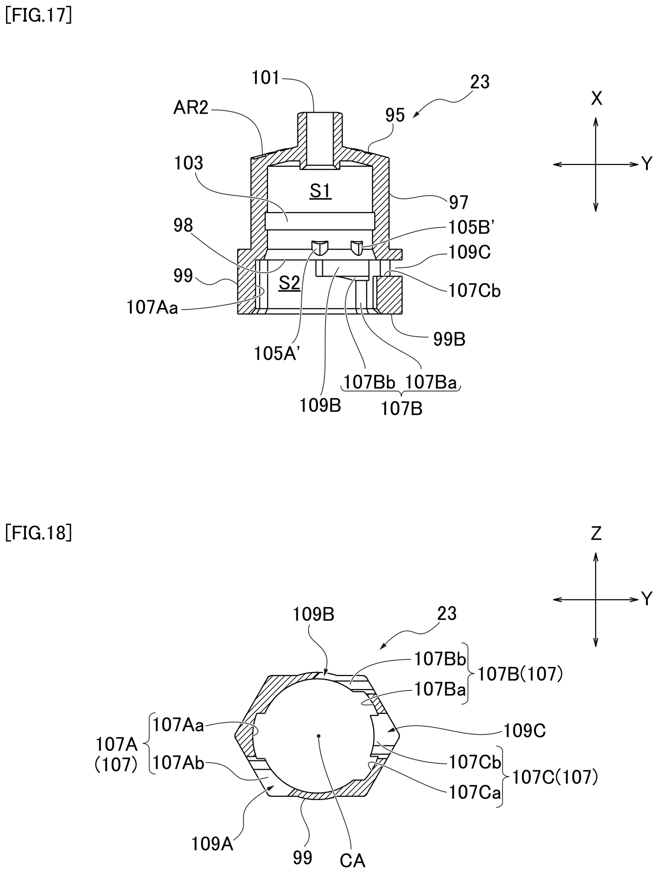

FIG. 16A is a front view of the mixer external body 23, FIG. 16B is a plan view thereof, and FIG. 16C is a bottom view thereof. FIG. 17 is a sectional view taken along line XVII-XVII shown in FIG. 16B. FIG. 18 is a sectional view taken along line XVIII-XVIII shown in FIG. 16A.

The mixer external body 23 is a tubular member that constitutes the external body OM of the static mixer 7 as the attachment member M. The mixer external body 23 receives therein the inside member IM composed of the mixing tip body 19 and the mixer housing 21, thereby constituting the static mixer 7 as the attachment member M. The mixer external body 23 is rotated relative to the syringe 3 about the central axis CA.

The mixer external body 23 includes a top wall portion 95 with a regular hexagonal outer peripheral shape, a first peripheral wall portion 97 rising from an edge portion of the top wall portion 95, and a second peripheral wall portion 99 that extends continuously from the first peripheral wall portion 97 via a step. The mixer external body includes a first space S1 surrounded by the top wall portion 95 and the first peripheral wall portion 97, and a second space S2 surrounded by the second peripheral wall portion 99 (see FIG. 17). The inside member IM, which is formed of the mixing tip body 19 and the mixer housing 21, is fitted into the first space S1 to be rotatable about the central axis CA. The tip end portion of the syringe 3 (one end portion 41A of the syringe body 41) is inserted into the second space S2 with the inside member IM stored (see FIG. 3).

The top wall portion 95 covers the end wall portion 93A of the mixer housing 21, and faces an opening portion into which the syringe is inserted (see FIG. 3). The top wall portion 95 is formed at its center portion with a top through tube 101 for exposing the element housing portion 37 to the outside. The top through tube 101 is a cylindrical portion projecting from the top wall portion 95, and passes through the top wall portion 95. When the mixer external body 23 receives the inside member IM including the mixing tip body 19 and the mixer housing 21, the element housing portion 37 passes through the top through tube 101. An arrow AR2 indicating the position of the recess 107A, which is described later, is engraved on the surface of the top wall portion 95 (see FIG. 16B).

As shown in FIG. 16B, the first peripheral wall portion 97 includes a regular hexagonal outer peripheral surface, when viewed along the central axis CA. As shown in FIG. 16C, an inner circumferential surface of the first peripheral wall portion 97 has a circular shape, when viewed along the central axis CA. The inner circumferential surface of the first peripheral wall portion 97 includes the circumferential groove 103, the pair of first engaged grooves 105A, 105A' and the pair of second engaged grooves 105B, 105B'.

As shown in FIG. 3, the circumferential groove 103 is a recess into which the flange portion 87C of the mixing tip body 19 is fitted, and extends in the circumferential direction (rotation direction of the inside member IM).

The first and second engaged grooves 105A, 105B on one side are recesses that engage with the one rotation engaging piece 91. The first and second engaged grooves 105A', 105B' on the other side are recesses that engages with the other rotation engaging piece 91'. The first engaged grooves 105A, 105A' as a pair and the second engaged grooves 105B, 105B' as a pair are arranged along the circumferential direction (rotation direction of the inside member IM) at a predetermined interval. Here, the pair of first engaged grooves 105A, 105A' are formed at opposite positions in the thickness direction Z with the central axis CA therebetween. The pair of second engaged grooves 105B, 105B' are formed at opposite positions in a direction circumferentially displaced from the thickness direction Z with the central axis CA therebetween.

After assembling the static mixer 7, the mixing tip body 19 and the mixer housing 21 are movable relative to the mixer external body 23 about the central axis CA. At this time, depending on the positional relationship in the rotation direction between the mixing tip body 19 and the mixer housing 21, and the mixer external body 23, the one rotation engaging piece 91 engages with either the first engaged groove 105A or the second engaged groove 105B on one side, and the other rotation engaging piece 91' engages with either the first engaged groove 105A' or the second engaged groove 105B' on the other side. This determines a relative position in the rotation direction between the mixing tip body 19 and the mixer housing 21, and the mixer external body 23.

As shown in FIG. 16B, the second peripheral wall portion 99 includes a hexagonal outer peripheral surface, when viewed along the central axis CA. The outer peripheral surface of the second peripheral wall portion 99 includes a pair of long sides 99A, 99A on the opposite sides of each other along the thickness direction Z. The pair of long sides 99A, 99A are bulged outwardly in the radial direction to allow insertion of the circular wall portion 41a of the syringe 3 (see FIGS. 16B, 16C, etc.). As shown in FIG. 16C, the inner circumferential surface of the second peripheral wall portion 99 has a circular shape, when viewed along the central axis CA.

The second peripheral wall portion 99 is formed in its inner circumferential surface with a stepped portion 98 and engaged portions 107 including three recesses 107A, 107B, 107C. The stepped portion 98 is formed at a boundary between the first peripheral wall portion 97 and the second peripheral wall portion 99. The stepped portion 98 is a step-like irregularity (unevenness) that narrows the inner diameter of the mixer external body 23 toward the top wall portion 95 and extends in the circumferential direction (rotation direction of the inside member IM). When the static mixer 7 is attached to the tip of the syringe 3, the circular wall portion 41a of the syringe 3 is in abutment with the stepped portion 98 (see FIG. 3).

The engaged portions 107 constitute an engagement structure that fixes the attachment member M to the tip portion of the syringe 3 (one end portion 41A of the syringe body 41) and engage with the engaging portions 45 (three projection pieces 45A, 45B, 45C) of the syringe 3.

Each of the recesses 107A, 107B, 107C includes a first groove portion 107Aa, 107Ba, 107Ca and a second groove portion 107Ab, 107Bb, 107Cb. The first groove portion 107Aa, 107Ba, 107Ca is opened at an end surface 99B of the second peripheral wall portion 99 (opening portion of the mixer external body 23 into which the syringe 3 is inserted) and extends along the longitudinal direction X (central axis CA) to the stepped portion 98. The second groove portion 107Ab, 107Bb, 107Cb extends from an end portion of the first groove portion 107Aa, 107Ba, 107Ca along the stepped portion 98 in the rotation direction of the mixer external body 23. Window portions 109A, 109B, 109C are formed through the second peripheral wall portion 99 at positions corresponding to the second groove portions 107Ab, 107Bb, 107Cb, respectively. In other words, the second groove portions 107Ab, 107Bb, 107Cb are defined by edges of the window portions 109A, 109B, 109C.

The recesses 107A, 107B, 107C are aligned along the rotation direction of the mixer external body 23 and are non-point symmetrical when viewed along the central axis CA and when the central axis CA corresponding to the rotation center of the external body OM is determined as the central point. In the first embodiment, the recesses 107A, 107B, 107C are aligned at non-equal intervals along the rotation direction of the mixer external body 23. In other words, the recess 107A is formed at a position that is on the inner circumferential surface of the second peripheral wall portion 99 and that corresponds to a corner portion of the outer peripheral surface of the second peripheral wall portion 99. The recesses 107B, 107C are formed at positions that are on the inner circumferential surface of the second peripheral wall portion 99 and that correspond to flat surface portions of the outer peripheral surface of the second peripheral wall portion 99 (see FIGS. 16C and 18). The recess 107A has a shape allowing the insertion of the projection piece 45A of the engaging portion 45. The recess 107B has a shape allowing the insertion of the projection piece 45B of the engaging portion 45. The recess 107C has a shape allowing the insertion of the projection piece 45C of the engaging portion 45. The recesses 107A, 107B, 107C have shapes that are different from each other when viewed along the central axis CA.

[Cap] In place of the static mixer 7, the cap 11 is fixed to a tip end portion of the syringe 3 (one end portion 41A of the syringe body 41) when the paste dispenser 1 is stored or transported. The configurations common to those of the static mixer 7 may be designated by the same member names, and their explanations may be omitted.

(Cap Inside Member)

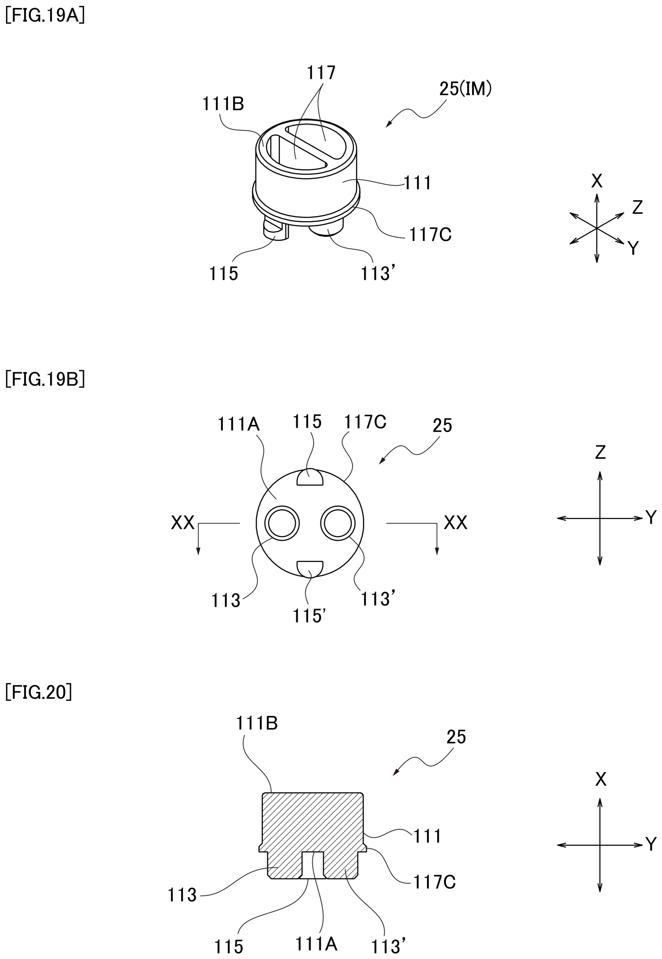

FIG. 19A is a perspective view of the cap inside member 25. FIG. 19B is a bottom view thereof. FIG. 20 is a sectional view taken along line XX-XX shown in FIG. 19B.

The cap inside member 25 constitutes the inside member IM of the cap 11 as the attachment member M and that corresponds to the mixing tip body 19 and the mixer housing 21 as the inside member IM of the static mixer 7.

Similar to the mixing tip body 19, the cap inside member 25 includes a base portion 111, two insertion portions 113, 113', and a pair of rotation engaging pieces 115, 115'.

The base portion 111 is a cylindrical portion that fits inside the cap external body 27 as the external body OM. The base portion 111 is formed at its outer circumferential portion with a flange portion 117C that extends outward in the radial direction. The cap inside member 25 is fixed to the cap external body 27 to be relatively rotatable about the central axis CA, by fitting the flange portion 117C into a groove (circumferential groove 125) formed in the inner circumferential surface of the cap external body 27, which is described later.

The two insertion portions 113, 113' and the pair of rotation engaging pieces 115, 115' are formed on a first end surface 111A of the base portion 111, which is opposed to the syringe 3, and extend from the first end surface 111A in the longitudinal direction X. When the cap 11 is attached to the syringe 3, the two insertion portions 113, 113' are inserted into the two projection portions 43, 43' of the syringe 3, respectively. Unlike the case of the mixing tip body 19, the insertion portions 113, 113' have a columnar shape to seal the discharge ports 51, 51', and thus no passages are formed therein. The pair of rotation engaging pieces 115, 115' are portions that are respectively brought into engagement with engaged grooves (a pair of first engaged grooves 127A, 127A' or a pair of second engaged grooves 127B, 127B') of the cap external body 27, which is described later.

The base portion 111 is formed, in its second end surface 111B opposite the first end surface 111A, with a pair of bottomed recesses 117, 117.

(Cap External Body)

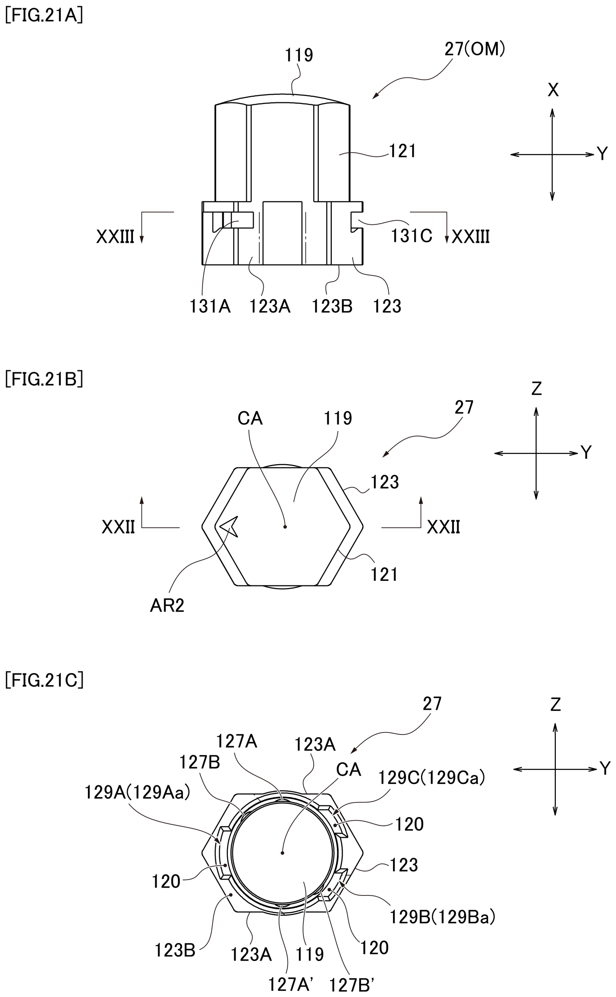

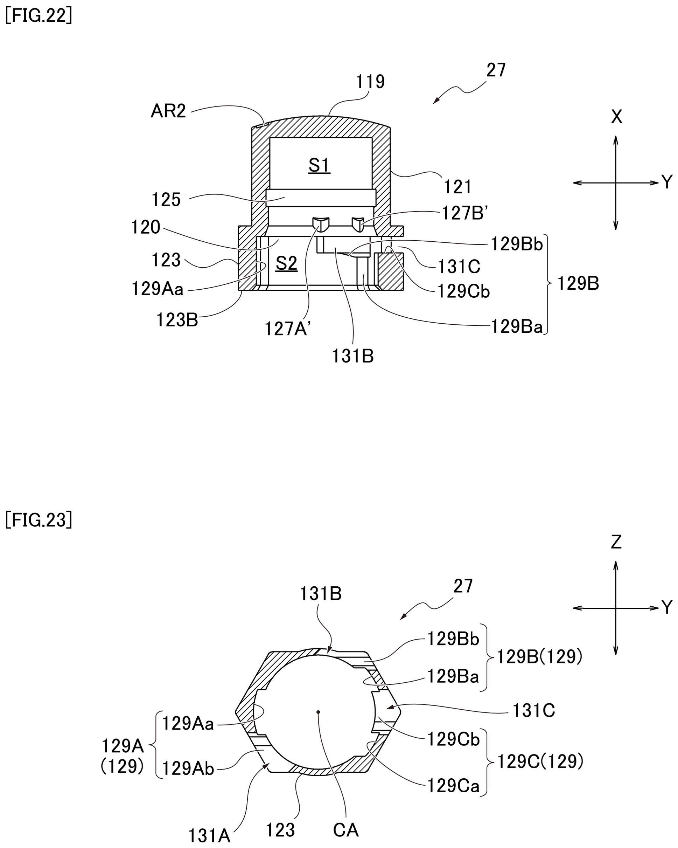

FIG. 21A is a front view of the cap external body 27. FIG. 21B is a plan view and FIG. 21C is a bottom view thereof. FIG. 22 is a sectional view taken along line XXII-XXII shown in FIG. 21B. FIG. 23 is a sectional view taken along line XXIII-XXIII shown in FIG. 21A.

The cap external body 27 is a tubular member that constitutes the external body OM of the cap 11 as the attachment member M. The cap external body 27 corresponds to the mixer external body 23 as the external body OM of the static mixer 7. The cap external body 27 receives the cap inside member 25, thereby constituting the cap 11 as the attachment member M. The cap external body 27 is rotatable relative to the syringe 3 about the central axis CA.

The cap external body 27 includes a top wall portion 119 with a regular hexagonal outer peripheral shape, a first peripheral wall portion 121 rising from an edge portion of the top wall portion 119, and a second peripheral wall portion 123 that extends continuously from the first peripheral wall portion 121 via a step. The cap external body 27 includes a first space S1 and a second space S2. The first space S1 is surrounded by the top wall portion 119 and the first peripheral wall portion 121. The second space S2 is surrounded by the second peripheral wall portion 123 (see FIG. 22). The inside member IM, which is formed of the cap inside member 25, is fitted into the first space S1 to be rotatable about the central axis CA. The tip end portion of the syringe 3 (one end portion 41A of the syringe body 41) is inserted into the second space S2 with the inside member IM stored.

The top wall portion 119 closes the first space S1. Unlike the mixing tip body 19, the top wall portion 119 is formed of a curved plate member and is not formed at its central portion with a top through hole. An arrow AR2 indicating the position of the recess 129A, which is described later, is engraved on the surface of the top wall portion 119 (see FIG. 21B).

As shown in FIG. 21B, the first peripheral wall portion 121 includes a regular hexagonal outer peripheral surface, when viewed along the central axis CA. As shown in FIG. 21C, an inner circumferential surface of the first peripheral wall portion 121 has a circular shape, when viewed along the central axis CA. The inner circumferential surface of the first peripheral wall portion 121 includes the circumferential groove 125, the pair of first engaged grooves 127A, 127A', and the pair of second engaged grooves 127B, 127B'.

The circumferential groove 125 is a recess into which the flange portion 117C of the cap inside member 25 is fitted, and extends in the circumferential direction (rotation direction of the inside member IM).

The first and second engaged grooves 127A, 127B on one side are recesses into which the one rotation engaging piece 115 is engaged. The first and second engaged grooves 127A', 127B' on the other side are recesses into which the other rotation engaging piece 115' is engaged. The pair of first engaged grooves 127A, 127A' and the pair of second engaged grooves 127B, 127B' are arranged along the circumferential direction (rotation direction of the inside member IM) at a predetermined interval. Here, the pair of first engaged grooves 127A, 127A' are formed at opposite positions in the thickness direction Z with the central axis CA therebetween. The pair of second engaged grooves 127B, 127B' are formed at opposite positions in a direction circumferentially displaced from the thickness direction Z with the central axis CA therebetween.

After assembling the cap 11, the cap inside member 25 is movable relative to the cap external body 27 about the central axis CA. At this time, depending on the positional relationship in the rotation direction between the cap inside member 25 and the cap external body 27, the one rotation engaging piece 115 engages with either the first engaged groove 127A or the second engaged groove 127B on one side, and the other rotation engaging piece 115' engages with either the first engaged groove 127A' or the second engaged groove 127B' on the other side. This determines a relative position in the rotation direction between the cap inside member 25 and the cap external body 27.

As shown in FIG. 21B, the second peripheral wall portion 123 includes a hexagonal outer peripheral surface, when viewed along the central axis CA. The outer peripheral surface of the second peripheral wall portion 123 includes a pair of long sides 123A, 123A on the opposite sides of each other along the thickness direction Z. The pair of long sides 123A, 123A are bulged outwardly in the radial direction to allow insertion of the circular wall portion 41a of the syringe 3 (see FIGS. 21B, 21C, etc.). As shown in FIG. 21C, the inner circumferential surface of the second peripheral wall portion 123 has a circular shape, when viewed along the central axis CA.

The second peripheral wall portion 123 is formed in its inner circumferential surface with a stepped portion 120 and engaged portions 129 composed of three recesses 129A, 129B, 129C. The stepped portion 120 is formed at a boundary between the first peripheral wall portion 121 and the second peripheral wall portion 123, is a step-like irregularity (unevenness) that narrows the inner diameter of the cap external body 27 toward the top wall portion 119, and extends in the circumferential direction (rotation direction of the inside member IM). When the cap 11 is attached to the tip of the syringe 3, the circular wall portion 41a of the syringe 3 is in abutment with the stepped portion 120.

The engaged portions 129 constitute an engagement structure that fixes the attachment member M to the tip portion of the syringe 3 (one end portion 41A of the syringe body 41) and engage with the engaging portions 45 (three projection pieces 45A, 45B, 45C) of the syringe 3.

Each recess 129A, 129B, 129C includes a first groove portion 129Aa, 129Ba, 129Ca and a second groove portion 129Ab, 129Bb, 129Cb. The first groove portion 129Aa, 129Ba, 129Ca opens at an end surface of the second peripheral wall portion 123 (opening portion of the cap external body 27 into which the syringe 3 is inserted) and extends along the longitudinal direction X (central axis CA) to the stepped portion 120. The second groove portion 129Ab, 129Bb, 129Cb extends from an end portion of the first groove portion 129Aa, 129Ba, 129Ca along the stepped portion 120 in the rotation direction of the cap external body 27. Window portions 131A, 131B, 131C are formed through the second peripheral wall portion 123 at positions corresponding to the second groove portions 129Ab, 129Bb, 129Cb, respectively. In other words, the second groove portions 129Ab, 129Bb, 129Cb are defined by edges of the window portions 131A, 131B, 131C.

The recesses 129A, 129B, 129C are aligned along the rotation direction of the cap external body 27 and are non-point symmetrical when viewed along the central axis CA and when the central axis CA corresponding to the rotation center of the external body OM is determined as the central point. In the first embodiment, the recesses 129A, 129B, 129C are aligned at non-equal intervals along the rotation direction of the cap external body 27. In other words, the recess 129A is formed at a position that is on the inner circumferential surface of the second peripheral wall portion 123 and that corresponds to a corner portion of the outer peripheral surface of the second peripheral wall portion 123. The recesses 129B, 129C are formed at positions that are on the inner circumferential surface of the second peripheral wall portion 123 and that correspond to flat surface portions of the outer peripheral surface of the second peripheral wall portion 123 (see FIGS. 21C and 23). The recess 129A has a shape allowing the insertion of the projection piece 45A of the engaging portion 45. The recess 129B has a shape allowing the insertion of the projection piece 45B of the engaging portion 45. The recess 129C has a shape allowing the insertion of the projection piece 45C of the engaging portion 45. The recesses 129A, 129B, 129C have shapes that are different from each other when viewed along the central axis CA.

[Details until Fixing Attachment Member]

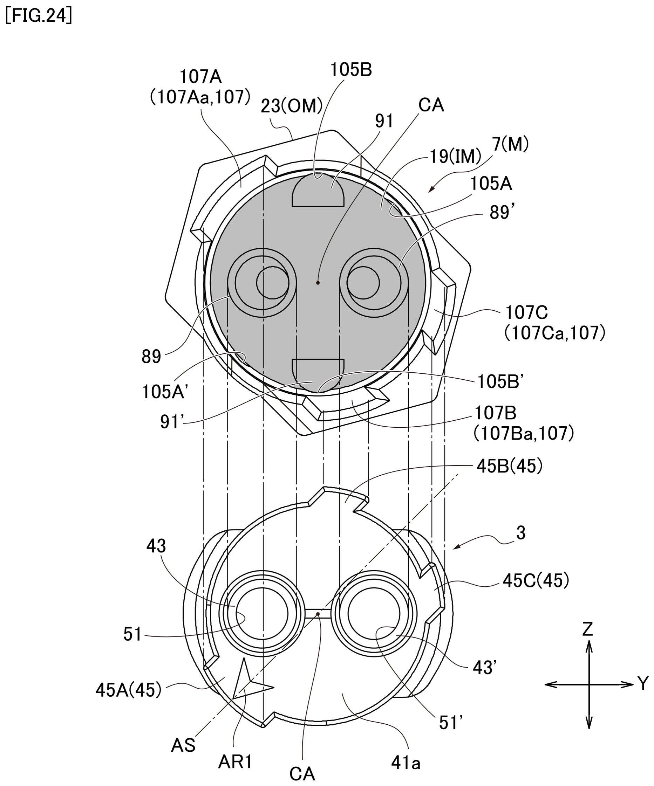

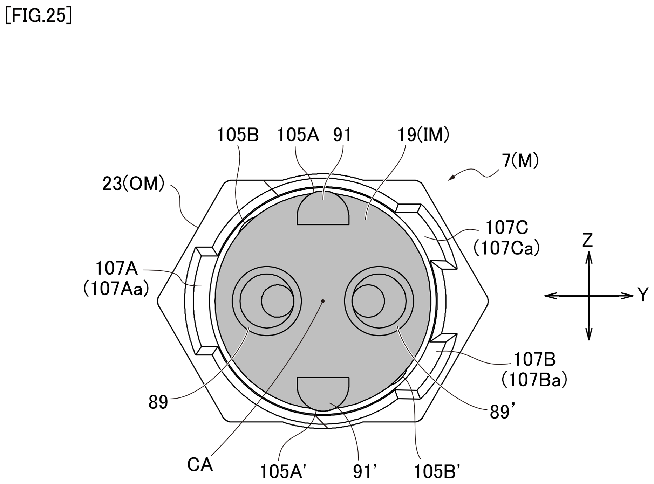

With reference to FIGS. 24 and 25, the details until fixing the attachment member M to the syringe 3 will be explained by using the static mixer 7 as an example. FIG. 24 is a view showing a condition of a stage prior to fixing the static mixer 7 over the syringe 3. FIG. 24 shows the static mixer 7 at the bottom and the syringe 3 in plan with fingerhold 47 left out. In FIGS. 24 and 25, the inside member IM is shown with a gray color.

As shown in FIG. 24, the static mixer 7 before its fixation to the syringe 3 is in a state that the one rotation engaging piece 91 is in engagement with the one second engaged groove 105B and that the other rotation engaging piece 91' is in engagement with the other second engaged groove 105B'. In other words, it is in a state that the width direction Y of the mixer external body 23 does not match with the width direction Y of the inside member IM. In this state, only when the positions of the first groove portions 107Aa, 107Ba, 107Ca of the recesses 107A, 107B, 107C are respectively opposed to the three projection pieces 45A, 45B, 45C of the syringe 3, it is possible to insert the circular wall portion 41a of the syringe 3 into the second space S2 surrounded by the second peripheral wall portion 99 of the mixer external body 23. Only at this time, the projection portion 43 of the syringe 3 is opposed to the insertion portion 89 of the mixing tip body 19, and the projection portion 43' of the syringe 3 is opposed to the insertion portion 89' of the mixing tip body 19.

The user can position the projection piece 45A and the recess 107A relative to each other by matching together the arrow AR1 in the surface of the circular wall portion 41a and the arrow AR2 in the surface of the top wall portion 95. As a result, the first groove portion 107Aa of the recess 107A is opposed to the projection piece 45A, the first groove portion 107Ba of the recess 107B is opposed to the projection piece 45B, the first groove portion 107Ca of the recess 107C is opposed to the projection piece 45C, the insertion portion 89 is opposed to the projection portion 43, and the insertion portion 89' is opposed to the projection portion 43'.

When the circular wall portion 41a of the syringe 3 is inserted into the second space S2, the insertion portion 89 is inserted into the projection portion 43, and the insertion portion 89' is inserted into the projection portion 43'. As a result, the rotational position of the inside member IM (mixing tip body 19 and mixer housing 21) is fixed relative to the syringe 3. The projection piece 45A is inserted into the first groove portion 107Aa of the recess 107A and abuts the stepped portion 98. The projection piece 45B is inserted into the first groove portion 107Ba of the recess 107B and abuts the stepped portion 98. The projection piece 45C is inserted into the first groove portion 107Ca of the recess 107C and abuts the stepped portion 98.

When the mixer external body 23 is rotated about the central axis CA in this state, the inside member IM (mixing tip body 19 and mixer housing 21) is not rotated, but only the mixer external body 23 as the external body OM is rotated, thereby resulting in a state of FIG. 25.

FIG. 25 is a bottom view of the static mixer 7 after the rotation of only the mixer external body 23 (the inserted syringe 3 is omitted in the drawing). When only the mixer external body 23 is rotated, the one rotation engaging piece 91 is brought into engagement with the one engaged groove 105A, and the other rotation engaging piece 91' is brought into engagement with the other engaged groove 105A'. The projection piece 45A enters the second groove portion 107Ab from an end portion of the first groove portion 107Aa along the stepped portion 98 and is exposed to the outside through the window portion 109A. The projection piece 45B enters the second groove portion 107Bb from an end portion of the first groove portion 107Ba along the stepped portion 98 and is exposed to the outside through the window portion 109B. The projection piece 45C enters the second groove portion 107Cb from an end portion of the first groove portion 107Ca along the stepped portion 98 and is exposed to the outside through the window portion 109C.

As a result, the projection pieces 45A, 45B, 45C are respectively brought into engagement into the recesses 107A, 107B, 107C, thereby fixing the static mixer 7 and the syringe 3 to each other.

<Operations of Paste Dispenser>

In the following, operations of the paste dispenser of the first embodiment are explained.

When the static mixer 7 or the cap 11 as the attachment member M is attached to the syringe 3, which includes, inside thereof, a plurality of paste storage chambers 49 and 49' in which a plurality of types of pastes are individually filled, it is necessary to define the relative position between the syringe 3 and the attachment member M (the static mixer 7 or the cap 11) at a predetermined position in order to prevent the pastes from being mixed.

Regarding this, in the paste dispenser 1 of the first embodiment, the static mixer 7 as the attachment member M includes the tubular mixer external body 23 (external body OM) into which the syringe 3 is inserted and which is rotatable about the central axis CA of the syringe 3; and the inside member IM which is disposed inside the mixer external body 23 (external body OM) and which includes the mixing tip body 19 and the mixer housing 21, the mixing tip body 19 including the plurality of insertion portions 89, 89' that are respectively inserted into the plurality of the discharge ports 51, 51' formed in the syringe 3. Here, the mixing tip body 19 and the mixer housing 21 are rotatable relative to the mixer external body 23 around the central axis CA.

The cap 11 as the attachment member M includes the tubular cap external body 27 (external body OM) into which the syringe 3 is inserted and which is rotatable about the central axis CA of the syringe 3; and the inside member IM which is disposed inside the cap external body 27 (external body OM) and which includes the cap inside member 25 including the plurality of insertion portions 113, 113' that are respectively inserted into the plurality of the discharge ports 51, 51' formed in the syringe 3. The cap inside member 25 is rotatable relative to the cap external body 27 around the central axis CA.

In the paste dispenser 1 of the first embodiment, the external body OM (mixer external body 23, cap external body 27) allows the syringe 3 to be inserted thereinto along the central axis CA and is fixed to the syringe 3 via an engagement structure that achieves an engagement by a rotation of the external body OM (mixer external body 23, cap external body 27) around the central axis CA. The engagement structure includes at least three engagement pairs, each pair including the engaging portion 45 that is formed on the syringe 3 and the engaged portion 107 or 129 that is formed in the external body OM (mixer external body 23, cap external body 27) and is engageable with the engaging portion 45. The at least three engagement pairs, each pair including the engaging portion 45 and the engaged portion 107 or 129, are aligned along a rotation direction of the external body OM (mixer external body 23, cap external body 27) and are non-point symmetrical around a central point positioned at the central axis CA when viewed along the central axis CA.

As a result, in the paste dispenser 1 of the first embodiment, at an engagement of the at least three engagement pairs between the engaging portions 45 and the engaged portions 107 or the engaged portions 129, unless the relative position between the syringe 3 and the external body OM (mixer external body 23, cap external body 27) in the rotation direction is at a predetermined position, it is not possible to achieve the engagement of the engagement pairs. In other words, in the paste dispenser 1 of the first embodiment, for example, when the attachment member M is the static mixer 7, as shown in FIG. 24, it is possible to insert the circular wall portion 41a of the syringe 3 into the second space S2 surrounded by the second peripheral wall portion 99 of the mixer external body 23; only when the first groove portion 107Aa of the recess 107A constituting the engaged portion 107 corresponds to the projection piece 45A constituting the engaging portion 45 of the syringe, the first groove portion 107Ba of the recess 107B corresponds to the projection piece 45B, and the first groove portion 107Ca of the recess 107C corresponds to the projection piece 45C. When the attachment member M is the cap 11, although it is not shown in the drawings, it is possible to insert the circular wall portion 41a of the syringe 3 into the second space S2 surrounded by the second peripheral wall portion 123 of the cap external body 27; only when the first groove portion 129Aa of the recess 129A constituting the engaged portion 129 corresponds to the projection piece 45A constituting the engaging portion 45 of the syringe 3, the first groove portion 129Ba of the recess 129B corresponds to the projection piece 45B, and the first groove portion 129Ca of the recess 129C corresponds to the projection piece 45C.

Only when the circular wall portion 41a of the syringe 3 can be inserted into the second space S2, the projection portion 43 faces the insertion portion 89, and the projection portion 43' faces the insertion portion 89'.

In this way, the paste dispenser 1 of the first embodiment makes it possible to determine the position of the external body OM (mixer external body 23, cap external body 27) in its rotation direction relative to the syringe 3 by the engagement of the three engagement pairs. As a result, when the attachment member M (static mixer 7, cap 11) is attached to the syringe 3, the paste dispenser 1 of the first embodiment can determine the relative position between the syringe 3 and the attachment member in the rotation direction at a predetermined position. Thus, it is possible to prevent the generation of paste solidification, for example, in the projection portion 43' caused by the penetration of paste adhered to the insertion portion 89 into the projection portion 43'.

In the paste dispenser 1 of the first embodiment, the at least three engagement pairs, that is, the engaging portions 45 and the engaged portions 107 or 129, are respectively aligned at non-equal intervals along the rotation direction of the external body OM (mixer external body 23, cap external body 27).

Thus, the paste dispenser 1 of the first embodiment can dispose the at least three engagement pairs, that is, the engaging portions 45 and the engaged portions 107 or 129, to be non-point symmetrical around the central axis CA when viewed along the central axis CA.

In the paste dispenser 1 of the first embodiment, at least one of the at least three engagement pairs, that is, the engaging portions 45 and the engaged portions 107 or 129, has a different shape when viewed along the central axis CA. In the first embodiment, the three projection pieces 45A, 45B, 45C constituting the engaging portions 45 are different from each other in shape when viewed along the central axis CA, and the recesses 129A, 129B, 129C and the three recesses 107A, 107B, 107C constituting the engaged portions 107 are different from each other in shape when viewed along the central axis CA.

Thus, the paste dispenser 1 of the first embodiment can dispose the at least three engagement pairs, that is, the engaging portions 45 and the engaged portions 107 or 129, to be non-point symmetrical around the central axis CA when viewed along the central axis CA.

In the paste dispenser 1 of the first embodiment, the engaged portions 107, 129 are formed by the recesses 107A, 107B, 107C, 129A, 129B, 129C including the first groove portions 107Aa, 107Ba, 107Ca, 129Aa, 129Ba, 129Ca, which extend toward the central axis CA, and the second groove portions 107Ab, 107Bb, 107Cb, 129Ab, 129Bb, 129Cb, which extend from the first groove portions 107Aa, 107Ba, 107Ca, 129Aa, 129Ba, 129Ca in the rotation direction of the external body OM (mixer external body 23, cap external body 27). The engaging portions 45 are formed by the projection pieces 45A, 45B, 45C, which are insertable into the recesses 107A, 107B, 107C, 129A, 129B, 129C.

As a result, the paste dispenser 1 of the first embodiment makes it possible to easily attach the attachment member M (static mixer 7, cap 11) to the syringe 3. The engaging portion 45 may be the recess including the first and second groove portions, and the engaged portion 107, 129 may be the projection portion.

In the paste dispenser 1 of the first embodiment, the outer peripheral surface of the external body OM (mixer external body 23, cap external body 27) has a polygonal shape (regular hexagon or hexagon) when viewed along the central axis CA, and the inner circumferential surface of the external body OM (mixer external body 23, cap external body 27) has a circular shape. At least one of the engaged portions 107, 129 is formed at a position corresponding to a corner portion of the outer peripheral surface, and at least one of the engaged portions 107, 129 is formed at a position corresponding to a flat surface portion of the outer peripheral surface.

Consequently, the paste dispenser 1 of the first embodiment can dispose the at least three engagement pairs, that is, the engaged portions 107 or 129, to be non-point symmetrical around the central axis CA when viewed along the central axis CA. In the paste dispenser 1 of the first embodiment, the outer peripheral surface of the external body OM (mixer external body 23, cap external body 27) includes a corner portion, which serves as a fingerhold for the user holding the external body OM (mixer external body 23, cap external body 27). Therefore, the user can easily hold the external body (mixer external body 23, cap external body 27) of the paste dispenser 1 of the first embodiment.

In the paste dispenser 1 of the first embodiment, the cap inside member 25 as the inside member IM includes the base portion 111, which is fitted into the cap external body 27 as the external body OM and formed with the insertion portions 113, 113'. The insertion portions 113, 113' have a columnar shape that is capable of sealing the discharge ports 51, 51'.

As a result, when the cap 11 as the attachment member M is attached to the syringe 3 to seal the discharge ports 51, 51' and prevent a leak of the pastes, the paste dispenser 1 of the first embodiment can determine the relative position between the syringe 3 and the cap 11 at a predetermined position. Therefore, the paste dispenser 1 of the first embodiment can securely attach the cap 11 to the syringe 3 to prevent a leak or mixing of the pastes.

In the paste dispenser 1 of the first embodiment, the mixer external body 23 as the external body OM includes the top wall portion 95 that faces an opening portion into which the syringe 3 is inserted, and the top through tube 101 that is formed on the top wall portion 95. The inside member IM includes the mixing tip body 19 including the base portion 87 that is formed on the first end surface 87A with the plurality of the insertion portions 89, 89' and on the second end surface 87B opposite the first end surface 87A with elements (element group 39) aligned along the central axis CA, and the paste passages 29, 29' that pass continuously through the insertion portions 89, 89' and the base portion 87 and opens at the second end surface 87B. The inside member further includes the mixer housing 21 including the element housing portion 37 that allows the elements (element group 39) to be inserted thereinto and opens at its tip, and the base housing portion 93 that allows the base portion 87 to be fitted thereinto. When the mixer housing 21 is combined with the mixing tip body 19, the element housing portion 37 is inserted into the top through tube 101 and is attached to the mixer external body 23 as the external body OM.

As a result, the paste dispenser 1 of the first embodiment can determine the relative position between the syringe 3 and the static mixer 7 at a predetermined position, when it discharges the pastes with the static mixer 7 attached to the syringe 3 while mixing them. Therefore, the paste dispenser 1 of the first embodiment can securely attach the static mixer 7 to the syringe 3.

Furthermore, the paste dispenser 1 of the first embodiment is used for preparing a dental material by mixing the plurality of types of the pastes and for injecting the dental material. Therefore, the paste dispenser 1 of the first embodiment can inject a dental material into a desired position, while appropriately preparing the dental material.

(Second Embodiment)

<Overall Configuration>

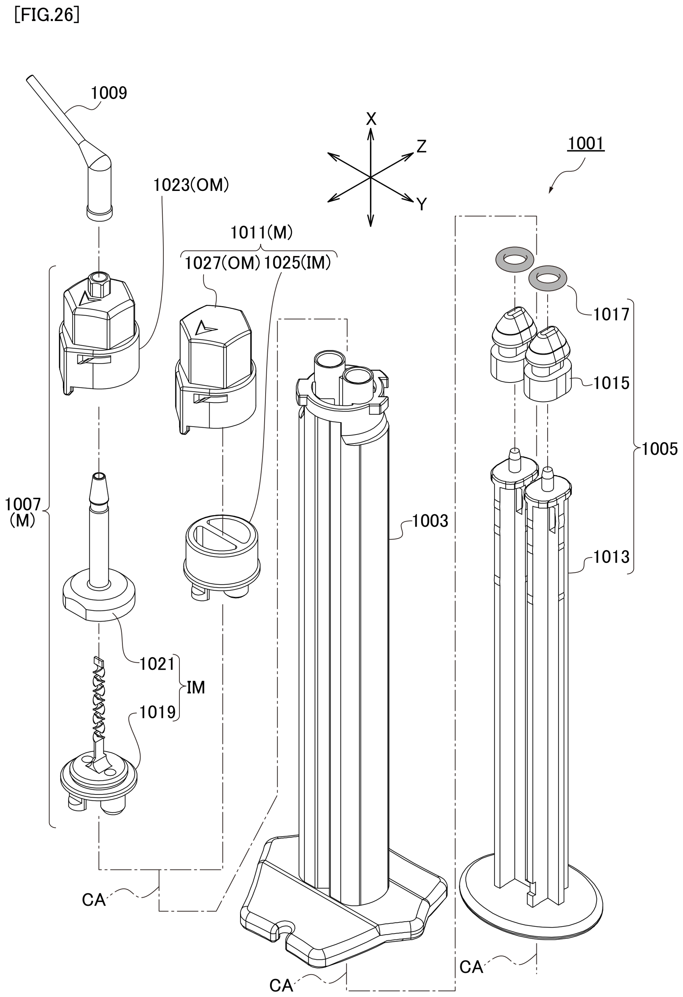

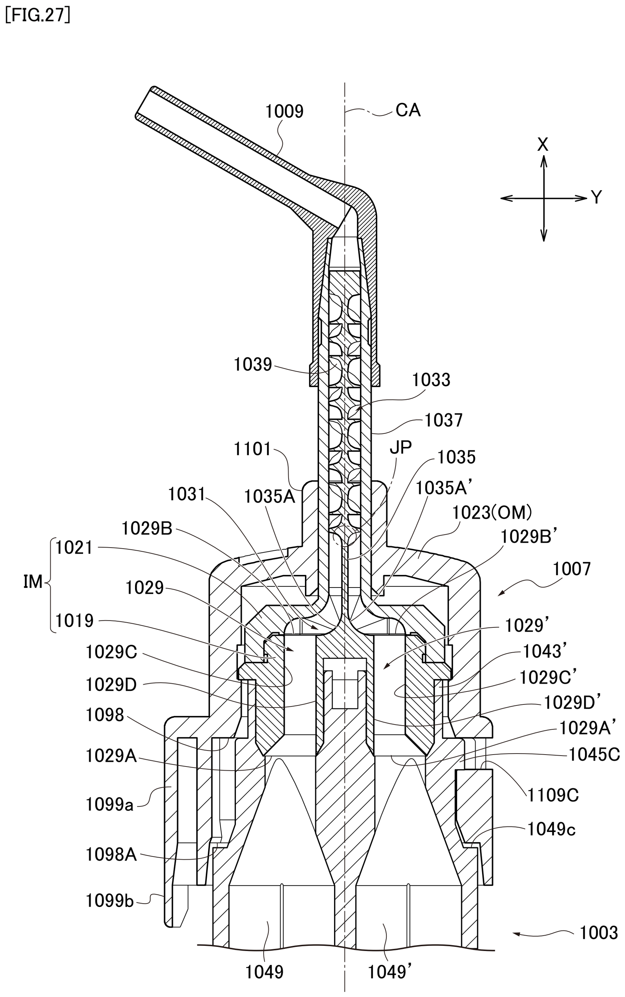

FIG. 26 is an exploded perspective view of the paste dispenser of the second embodiment. FIG. 27 is a sectional view, which is taken in the width direction at a position passing through a central axis extending in the longitudinal direction, of the static mixer fixed to a tip end portion of a syringe of the second embodiment. Also in the second embodiment, as shown in FIG. 26, the longitudinal direction (X), the width direction (Y), and the thickness direction (Z) are defined with respect to the paste dispenser 1001.

Similar to the first embodiment, a paste dispenser 1001 of the second embodiment includes a syringe 1003, a plunger 1005, a static mixer 1007, and a guide tip 1009. Similar to the first embodiment, the guide tip 1009 is fitted on the static mixer 1007 as needed. The paste dispenser 1001 is usable even without fitting the guide tip 1009 on the static mixer 1007.

In the paste dispenser 1001 of the second embodiment, similar to the first embodiment, in place of the static mixer 1007, a cap 1011 shown in FIG. 26 can be fixed to a tip end portion of the syringe 1003 (one end portion 1041A of a syringe body 1041). Also in the second embodiment, both of the static mixer 1007 and the cap 1011, which are detachably attached to the tip end portion of the syringe 1003 (one end portion 1041A of the syringe body 1041), are referred to as an attachment member M.

Similar to the first embodiment, the plunger 1005 includes a plunger body 1013, an elastic-body holder 1015 that is in a loose engagement with the tip of the plunger body 1013, and an annular O-ring (elastic body) 1017 that is attached to the elastic-body holder 1015.

In the second embodiment, the syringe 1003, the static mixer 1007, and the cap 1011 are different from those of the first embodiment in their shapes. In the following, they are described in detail, respectively.

[Syringe]

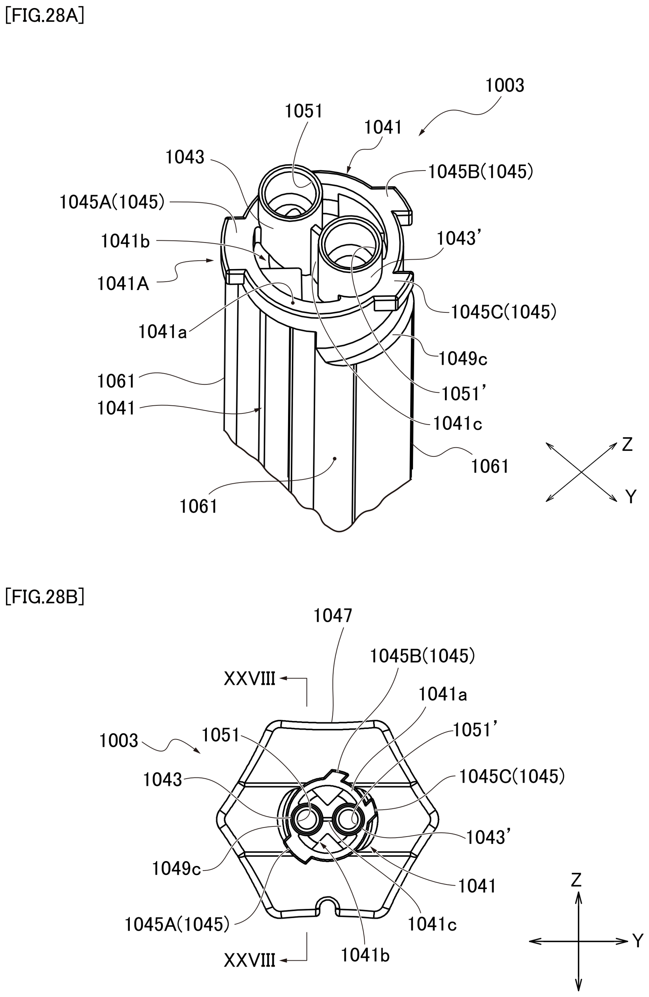

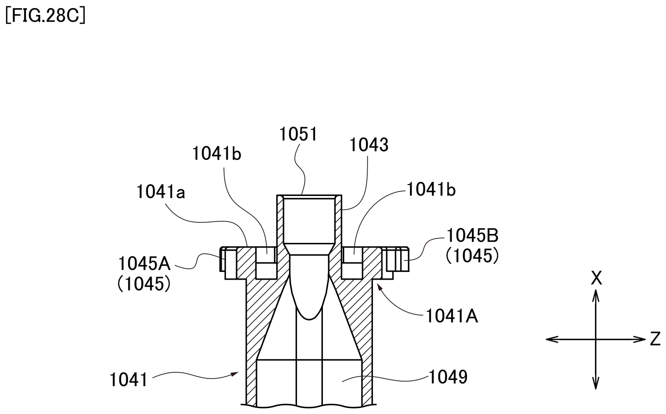

FIG. 28A is a perspective view of the tip end portion of the syringe 1003. FIG. 28B is a plan view thereof. FIG. 28C shows a major portion in a cross-section taken along line XXVIII-XXVIII shown in FIG. 28B. The parts in common with those of the first embodiment are denoted by reference numerals obtained by adding 1000 to those of FIGS. 4A to 4D and 5, and their explanations are omitted.

Similar to the first embodiment, in the syringe 1003 of the second embodiment, the syringe body 1041 is formed at one end portion 1041A with a circular wall portion 1041a and at the other end portion 1041B with a fingerhold 1047. A pair of projection portions 1043, 1043' are formed to project from the circular wall portion 1041a. Engaging portions 1045 composed of three projection pieces 1045A, 1045B, 1045C are formed on an outer circumferential surface of the circular wall portion 1041a.

The circular wall portion 1041a of the second embodiment is formed in its surface (end surface of the one end portion 1041A) with depressions 1041b. The depression 1041b is formed between a peripheral portion of the circular wall portion 1041a and the projection portions 1043, 1043' and is stepped as appropriate. The formation of the depressions 1041b in the surface of the circular wall portion 1041a prevents the occurrence of sink marks when the syringe 1003 is prepared by resin molding. Preventing the occurrence of sink marks can suppress inclination of the projection portions 1043, 1043'.

Also in the second embodiment, emboss processing may be conducted on the surface on the side of the one end portion 1041A of the fingerhold 1047.

In the syringe body 1041 of the second embodiment, the radius of curvature of connecting outer peripheral surfaces 1061 is set to a curved surface of R2.5 that is greater than that of the connecting outer peripheral surfaces 61 of the first embodiment. As a result, in the syringe 1003 of the second embodiment, a label affixed to the outer peripheral surface of the syringe body 1041 becomes more gently curved on the connecting outer peripheral surfaces 1061 than in the first embodiment. Therefore, the syringe 1003 of the second embodiment can make the label, which is affixed to the outer peripheral surface of the syringe body 1041, less likely to peel off than that of the first embodiment.

[Static Mixer]

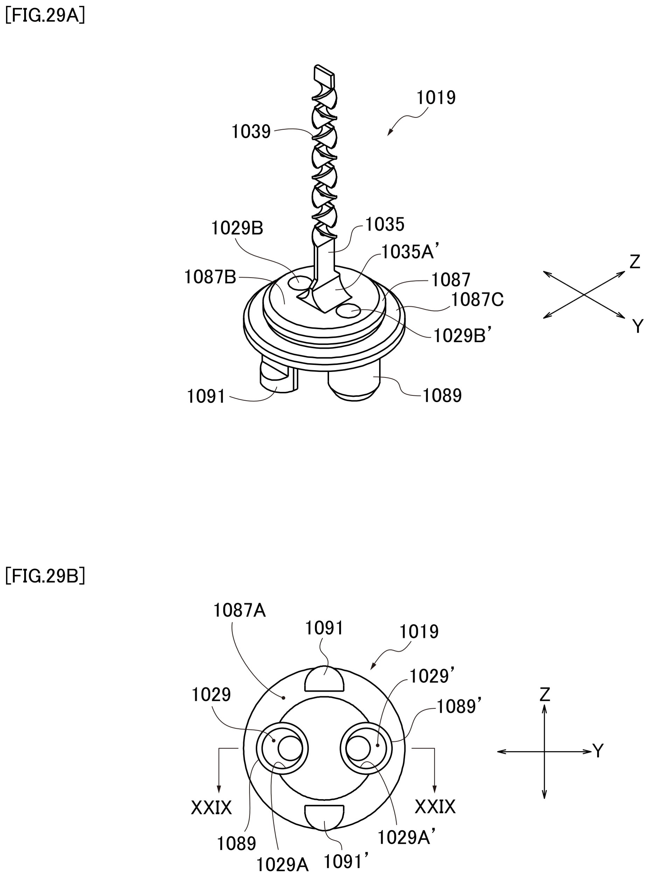

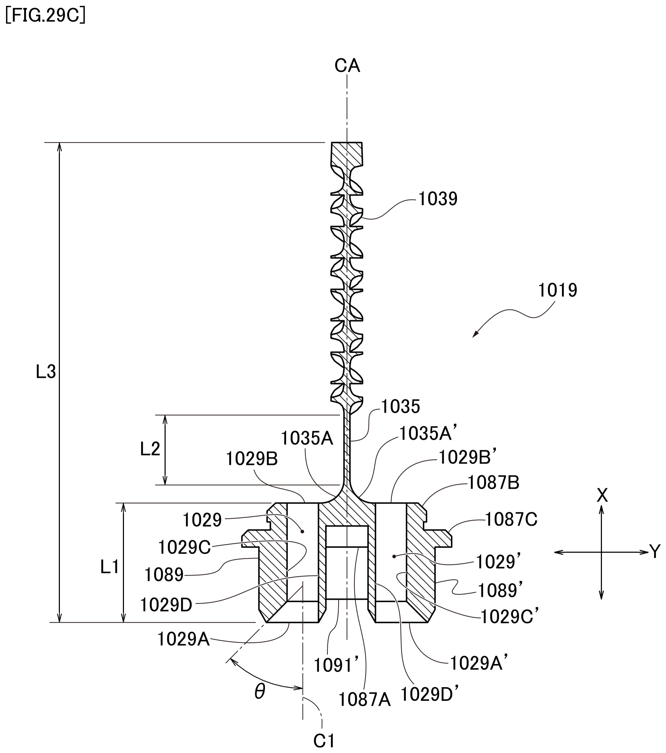

FIG. 29A is a perspective view of a mixing tip body 1019, and FIG. 29B is a bottom view thereof. FIG. 29C is a sectional view taken along line XXIX-XXIX shown in FIG. 29B. The parts in common with those of the first embodiment are denoted by reference numerals obtained by adding 1000 to those of FIGS. 12A, 12B and 13, and their explanations are omitted.

Similar to the first embodiment, the mixing tip body 1019 of the second embodiment includes a cylindrical base portion 1087. The base portion 1087 is formed at its outer circumferential portion with a flange portion 1087C. Two insertion portions 1089, 1089' and a pair of rotation engaging pieces 1091, 1091' are formed on a first end surface 1087A of the base portion 1087, which is opposed to the syringe 1003. The insertion portion 1089 includes the paste passage 1029 and the insertion portion 1089' includes the paste passage 1029'. A backflow prevention wall 1035 and an element group 1039 extending from the tip of the backflow prevention wall 1035 are formed on a second end surface 1087B opposite the first end surface 1087A of the base portion 1087.

The mixing tip body 1019 of the second embodiment includes a length L1 along the longitudinal direction X of the base portion 1087 that is shorter than that of the base portion 87 of the mixing tip body 19 of the first embodiment. On the other hand, the backflow prevention wall 1035 of the second embodiment includes a length L2 along the longitudinal direction X that is longer than that of the backflow prevention wall 35 of the first embodiment. Therefore, the total length L3 along the longitudinal direction X of the mixing tip body 1019 (length from the tip end of the insertion portions 1089, 1089' to the tip end of the element group 1039) is set to the same length as that of the mixing tip body 19 of the first embodiment.

In the mixing tip body 1019 of the second embodiment, a tapered portion on a distal surface 1029C of the paste passage 1029 is formed in a region from the inflow hole 1029A to a midway position of the paste passage 1029. In other words, in the second embodiment, a portion of the distal surface 1029C from the inflow hole 1029A to the midway position of the paste passage 1029 is formed into a tapered shape that gradually approaches the central axis CA as it goes toward the outflow hole 1029B. The angle of the tapered portion, that is, the angle θ between the distal surface 1029C and a straight line C1 passing through the center point of the inflow hole 1029A and extending in the longitudinal direction X is set here at 45 degrees.

A region of the distal surface 1029C from the tapered portion to the outflow hole 1029B extends in parallel with and is along a proximal surface 1029D and the central axis CA. In other words, the area of a cross-section perpendicular to the central axis CA (longitudinal direction X) of the paste passage 1029 of the second embodiment becomes gradually smaller at a constant rate from the inflow hole 1029A to the midway position of the paste passage 1029, but becomes the same as that of the opening of the outflow hole 1029B from the midway position of the paste passage 1029 to the outflow hole 1029B.

In this way, the tapered portion of the distal surface 1029C is formed in a region from the inflow hole 1029A to the midway position of the paste passage 1029. Therefore, while suppressing the accumulation of bubbles in the paste passage 1029, the paste dispenser 1001 of the second embodiment can reduce the amount of paste flowing through and remaining in the paste passage 1029, as compared with the case of the paste passage 29 of the first embodiment.

Since the paste passage 1029' has the same configuration as that of the paste passage 1029, the prime (') is added to the reference numerals of each part of the paste passage 1029, and the explanation is omitted. Also in the second embodiment, the paste passages 1029, 1029' are formed in the same size and have a symmetrical shape about the central axis CA along the width direction Y.

(Mixer Housing)

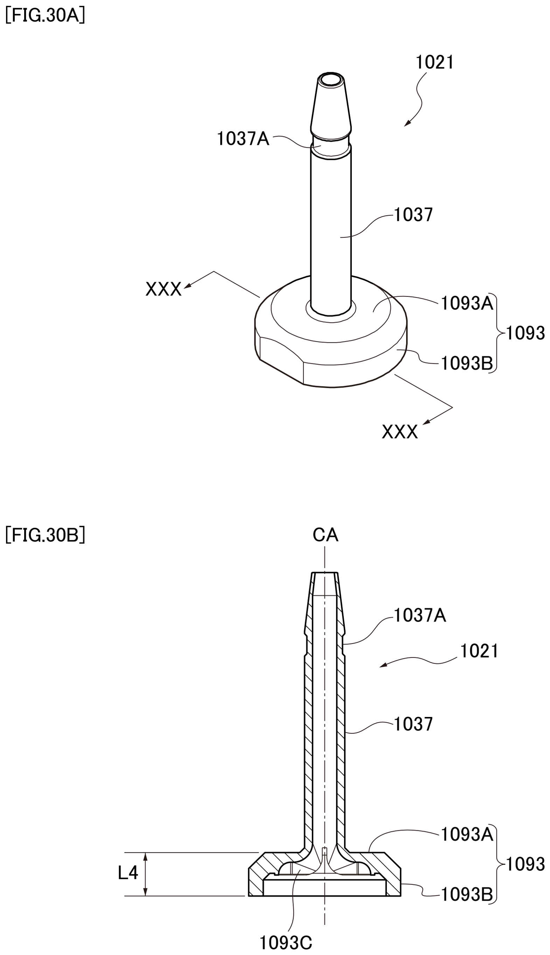

FIG. 30A is a perspective view of a mixer housing 1021. FIG. 30B is a sectional view taken along line XXX-XXX shown in FIG. 30A. The parts in common with those of the first embodiment are denoted by reference numerals obtained by adding 1000 to those of FIGS. 14A and 15, and their explanations are omitted.

The mixer housing 1021 of the second embodiment is the same as the mixer housing 21 of the first embodiment in its basic shape. In other words, the mixer housing 1021 of the second embodiment includes a base housing portion 1093 and an element housing portion 1037.

The base housing portion 1093 includes a circular end wall portion 1093A that covers the second end surface 1087B of the base portion 1087 of the mixing tip body 1019, and a peripheral wall portion 1093B that surrounds the base portion 1087 and its tip contacts the flange portion 1087C. The element housing portion 1037 extends in the longitudinal direction X from a through hole formed at a central portion of the end wall portion 1093A and includes a guide-tip engaging groove 1037A at its outer circumferential surface.

The end wall portion 1093A is formed in its inner wall with a recess 1093C in a position opposite the outflow holes 1029B, 1029B' of the mixing tip body 1019. The intermediate passage 1031, which is delineated by the base portion 1087, the backflow prevention wall 1035, and the recess 1093C, is formed in the inside of the inside member IM (see FIG. 27).

The base portion 1087 of the mixing tip body 1019 of the second embodiment includes a length along the longitudinal direction X from the flange portion 1087C to the second end surface 1087B that is shorter than that of the first embodiment. Therefore, in the mixer housing 1021 of the second embodiment, the length L4 along the longitudinal direction X of the peripheral wall portion 1093B, which surrounds the base portion 1087 and has its tip in abutment with the flange portion 1087C, is shorter than that of the peripheral wall portion 93B of the mixer housing 21 of the first embodiment.

(Mixer External Body)

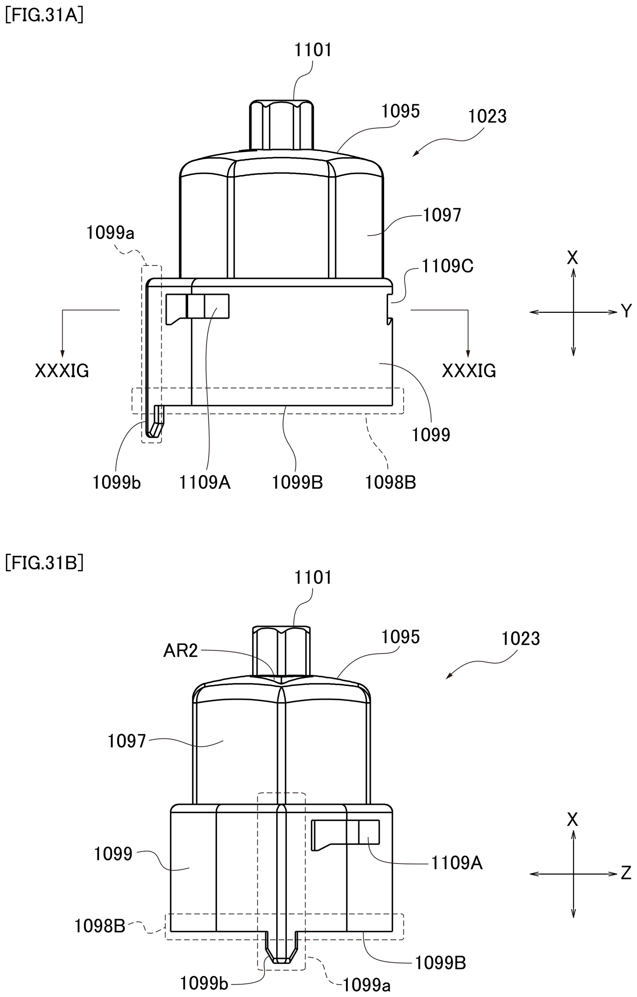

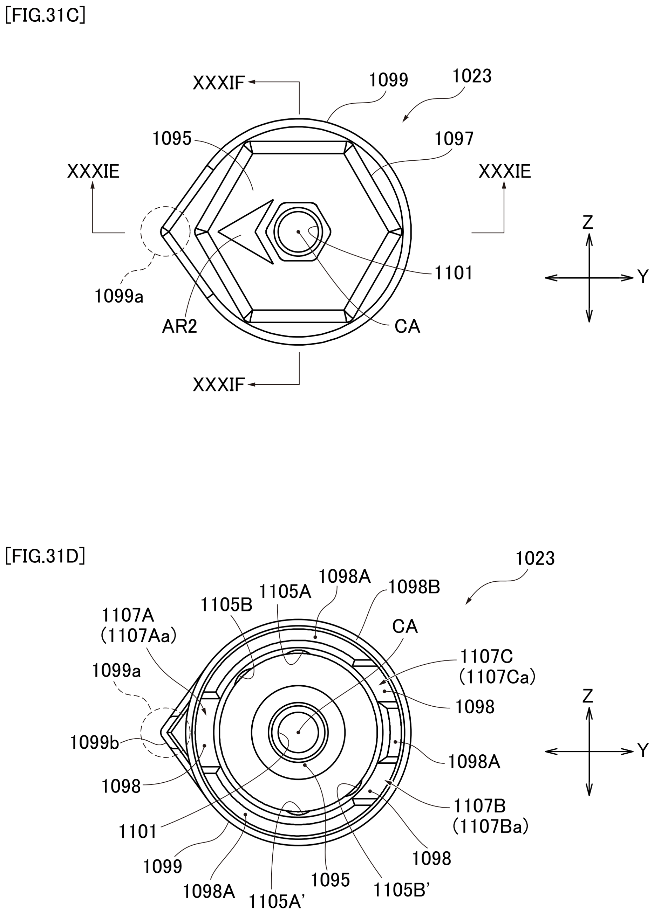

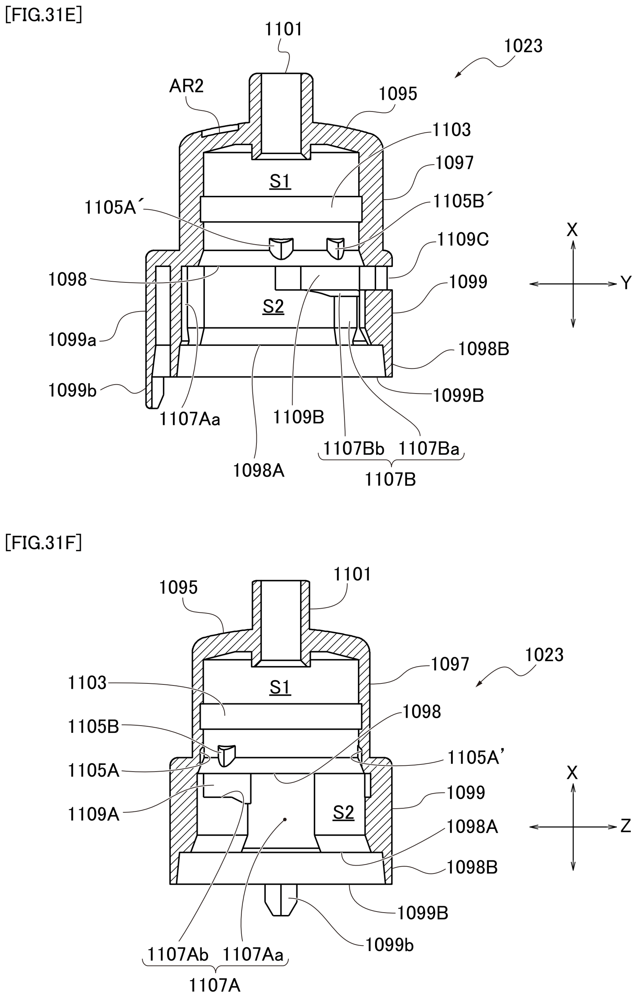

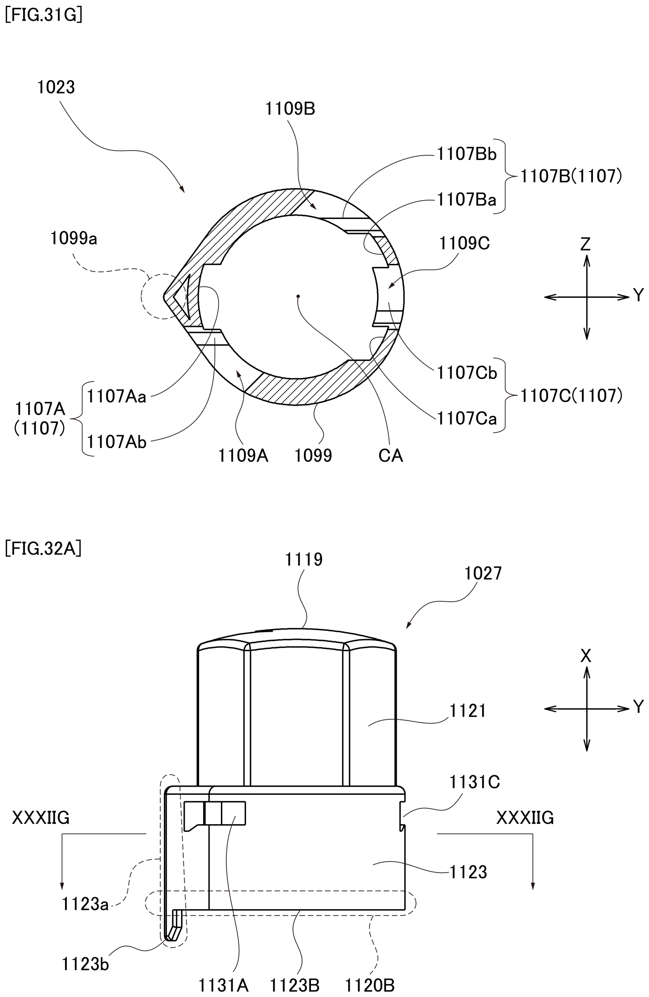

FIG. 31A is a front view of a mixer external body 1023. FIG. 31B is a side view thereof. FIG. 31C is a plan view thereof. FIG. 31D is a bottom view thereof. FIG. 31E is a sectional view taken along line XXXIE-XXXIE shown in FIG. 31C. FIG. 31F is a sectional view taken along line XXXIF-XXXIF shown in FIG. 31C. FIG. 31G is a sectional view taken along line XXXIG-XXXIG shown in FIG. 31A. The parts in common with those of the first embodiment are denoted by reference numerals obtained by adding 1000 to those of FIGS. 16A to 16C, 17 and 18, and their explanations are omitted.

The mixer external body 1023 includes a top wall portion 1095, a first peripheral wall portion 1097 rising from an edge portion of the top wall portion 1095, and a second peripheral wall portion 1099 that extends continuously from the first peripheral wall portion 1097 via a step. Similar to the first embodiment, the mixer external body includes a first space S1 and a second space S2. The first space S1 is surrounded by the top wall portion 1095 and the first peripheral wall portion 1097. The second space S2 is surrounded by the second peripheral wall portion 1099 (see FIGS. 31E and 31F).

The top wall portion 1095 has a regular hexagonal outer peripheral shape. The top wall portion 1095 is formed at its center portion with a top through tube 1101 and is engraved in its surface with an arrow AR2 indicating the position of a recess 1107A (see FIG. 31C). The arrow AR2 is engraved at a position overlapping with the recess 1107A along the central axis CA. The recess 1107A is one of the engaged portions 1107, which is described later.

As shown in FIG. 31C, the first peripheral wall portion 1097 includes a regular hexagonal outer peripheral surface, when viewed along the central axis CA. As shown in FIG. 31D, an inner circumferential surface of the first peripheral wall portion 1097 has a circular shape, when viewed along the central axis CA. The inner circumferential surface of the first peripheral wall portion 1097 includes the circumferential groove 1103, a pair of first engaged grooves 1105A, 1105A' and a pair of second engaged grooves 1105B, 1105B'.

As shown in FIG. 31C, when viewed along the central axis CA, the second peripheral wall portion 1099 includes an outer circumferential surface which is curved in an arc shape centered on the central axis CA and a part of which is pointed outwardly, thereby forming a droplet shape. The pointed part of the outer circumferential surface of the second peripheral wall portion 1099 is defined as a sharp portion 1099a, and the tip of the sharp portion 1099a coincides with the direction pointed by the arrow AR2 formed in the top wall portion 1095. The sharp portion 1099a is formed with a projection portion 1099b projecting along the central axis CA from an end surface 1099B of the second peripheral wall portion 1099 (opening portion of the mixer external body 1023 into which the syringe 1003 is inserted). Therefore, the projection portion 1099b is formed at a position that is coincident, in the circumferential direction centered on the central axis CA, with the position where the recess 1107A as one of the engaged portions 1107 is formed.

The inner circumferential surface of the second peripheral wall portion 1099 includes a stepped portion 1098, a second stepped portion 1098A, and engaged portions 1107 including three recesses 1107A, 1107B, 1107C.

The stepped portion 1098 is formed at a boundary between the first peripheral wall portion 1097 and the second peripheral wall portion 1099. The stepped portion 1098 is a step-like irregularity (unevenness) that narrows the inner diameter of mixer external body 1023 toward the top wall portion 1095. The stepped portion 1098 extends in the circumferential direction (rotation direction of the inside member IM). When the static mixer 1007 is attached to the tip of the syringe 1003, the circular wall portion 1041a of the syringe 1003 is in abutment with the stepped portion 1098 (see FIG. 27).

The second stepped portion 1098A is a step-like irregularity (unevenness) that narrows the inner diameter of the mixer external body 1023 toward the top wall portion 1095, and is formed at a position closer to the end surface 1099B of the second peripheral wall portion 1099 than the stepped portion 1098. The second stepped portion 1098A extends in the circumferential direction (rotation direction of the inside member IM). When the static mixer 1007 is attached to the tip of the syringe 1003, stepped portions 1049c formed on the outer circumferential surfaces of the paste storage chambers 1049, 1049' abut the second stepped portion 1098A (see FIG. 27).

Similar to the first embodiment, each recess 1107A, 1107B, 1107C includes a first groove portion 1107Aa, 1107Ba, 1107Ca and a second groove portion 1107Ab, 1107Bb, 1107Cb. Window portions 1109A, 1109B, 1109C are formed through the second peripheral wall portion 1099 at positions corresponding to the second groove portions 1107Ab, 1107Bb, 1107Cb, respectively. The first groove portions 1107Aa, 1107Ba, 1107Ca are opened at the second stepped portion 1098A and extends along the longitudinal direction X (central axis CA) to the stepped portion 1098.

Furthermore, the mixer external body 1023 of the second embodiment is formed with a cylindrical wall portion 1098B that rises from an edge portion of the second stepped portion 1098A along the central axis CA and that forms an opening portion of the mixer external body 1023. When the static mixer 1007 is attached to the tip of the syringe 1003, the cylindrical wall portion 1098B is a cylindrical wall surface surrounding the stepped portions 1049c formed on the outer peripheral surfaces of the paste storage chambers 1049, 1049'. With the cylindrical wall portion 1098B rising from the edge portion of the second stepped portion 1098A, each of the first groove portions 1107Aa, 1107Ba, 1107Ca is opened inside the cylindrical wall portion 1098B. In other words, the cylindrical wall portion 1098B projects along the central axis CA beyond the engaged portions 1107.

[Cap]

(Cap External Body)

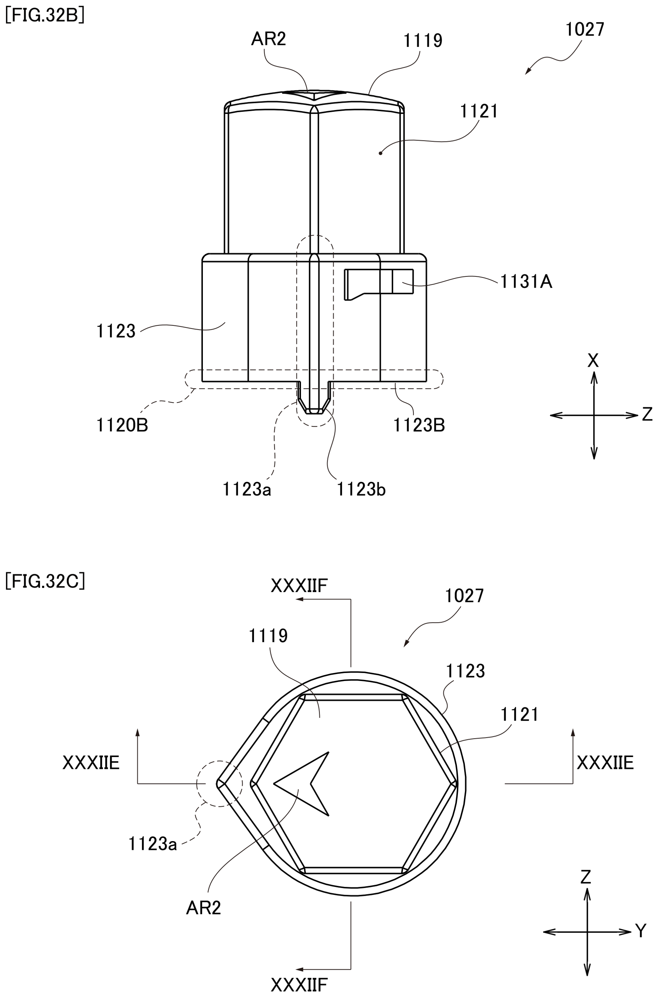

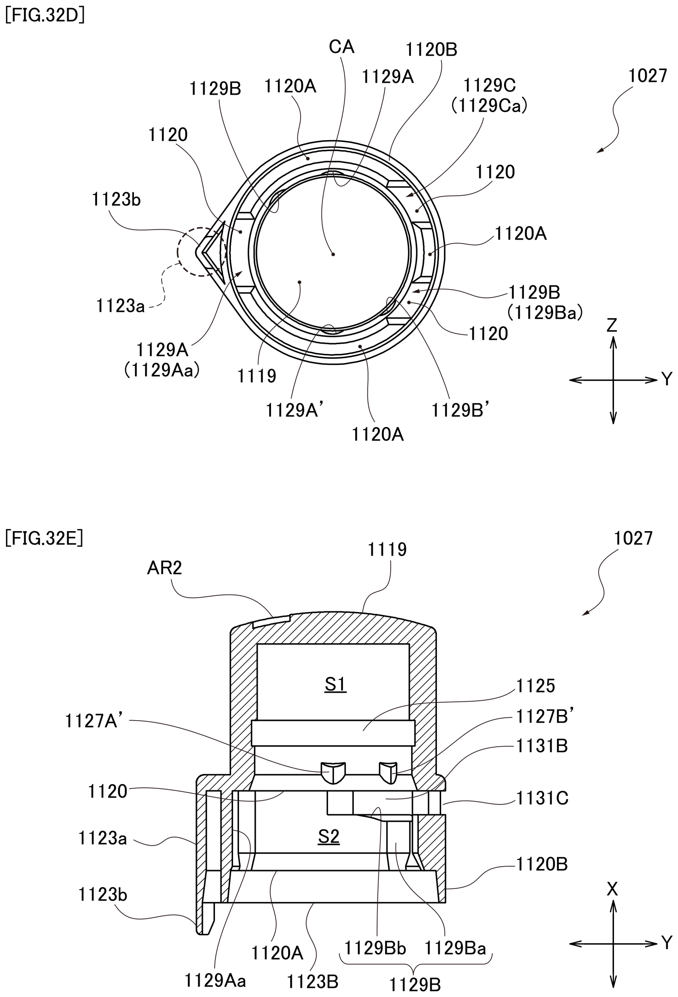

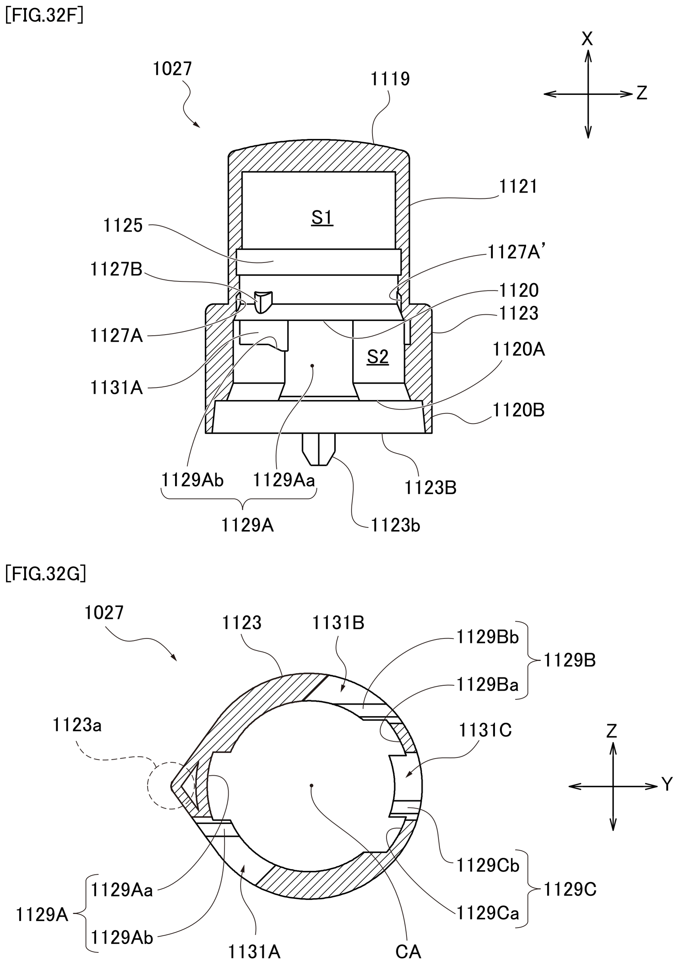

FIG. 32A is a front view of a cap external body 1027, FIG. 32B is a side view thereof, FIG. 32C is a plan view thereof, and FIG. 32D is a bottom view thereof. FIG. 32E is a sectional view taken along line XXXIIE-XXXIIE shown in FIG. 32C. FIG. 32F is a sectional view taken along line XXXIIF-XXXIIF shown in FIG. 32C. FIG. 32G is a sectional view taken along line XXXIIG-XXXIIG shown in FIG. 32A. The parts in common with those of the first embodiment are denoted by reference numerals obtained by adding 1000 to those of FIGS. 21A to 21C, 22 and 23, and their explanations are omitted.

A cap inside member 1025 in the cap 1011 of the second embodiment is the same as that of the first embodiment in configuration. Therefore, its explanation is omitted.

The cap external body 1027 includes a top wall portion 1119, a first peripheral wall portion 1121 rising from an edge portion of the top wall portion 1119, and a second peripheral wall portion 1123 that extends continuously from the first peripheral wall portion 1121 via a step. Similar to the first embodiment, the cap external body 1027 is formed in its inside with a first space S1 that is surrounded by the top wall portion 1119 and the first peripheral wall portion 1121, and a second space S2 that is surrounded by the second peripheral wall portion 1123 (see FIGS. 32E and 32F).

The top wall portion 1119 is configured to close the first space S1. Unlike the mixing tip body 1019, the top wall portion 1119 is formed of a curved plate member and is not formed at its central portion with a top through hole. An arrow AR2 indicating the position of the recess 1129A, which is described later, is engraved on the surface of the top wall portion 1119 (see FIG. 32C). The arrow AR2 is engraved at a position overlapping with the recess 1129A along the central axis CA. The recess 1129A is one of the engaged portions 1129, which is described later.

As shown in FIG. 32C, the first peripheral wall portion 1121 includes a regular hexagonal outer peripheral surface, when viewed along the central axis CA. As shown in FIG. 32D, an inner circumferential surface of the first peripheral wall portion 1121 has a circular shape, when viewed along the central axis CA. The inner circumferential surface of the first peripheral wall portion 1121 is formed with a circumferential groove 1125, a pair of first engaged grooves 1127A, 1127A' and a pair of second engaged grooves 1127B, 1127B'.

As shown in FIG. 32C, when viewed along the central axis CA, the second peripheral wall portion 1123 includes an outer circumferential surface which is curved in an arc shape centered on the central axis CA and a part of which is pointed outwardly, thereby forming a droplet shape. The pointed part of the outer circumferential surface of the second peripheral wall portion 1123 is defined as a sharp portion 1123a, and the tip of the sharp portion 1123a coincides with the direction pointed by the arrow AR2 formed in the top wall portion 1119. The sharp portion 1123a is formed with a projection portion 1123b projecting along the central axis CA from an end surface 1123B of the second peripheral wall portion 1123 (opening portion of the cap external body 1027 into which the syringe 1003 is inserted). Therefore, the projection portion 1123b is formed at a position that is coincident, in the circumferential direction centered on the central axis CA, with the position where the recess 1129A as one of the engaged portions 1129 is formed.

The second peripheral wall portion 1123 includes, on its inner circumferential surface, a stepped portion 1120, a second stepped portion 1120A, and engaged portions 1129 including three recesses 1129A, 1129B, 1129C.

The stepped portion 1120 is formed at a boundary between the first peripheral wall portion 1121 and the second peripheral wall portion 1123. The stepped portion 1120 is a step-like irregularity (unevenness) that narrows the inner diameter of the cap external body 1027 toward the top wall portion 1119. The stepped portion 1120 extends in the circumferential direction (rotation direction of the inside member IM). When the cap 1011 is attached to the tip of the syringe 1003, the circular wall portion 1041a of the syringe 1003 abuts the stepped portion 1120 (see FIG. 27).

The second stepped portion 1120A is a step-like irregularity (unevenness) that narrows the inner diameter of the cap external body 1027 toward the top wall portion 1119, and is formed at a position closer to the end surface 1123B of the second peripheral wall portion 1123 than the stepped portion 1120. The second stepped portion 1120A extends in the circumferential direction (rotation direction of the inside member IM). When the cap 1011 is attached to the tip of the syringe 1003, the stepped portions 1049c formed on the outer circumferential surfaces of the paste storage chambers 1049, 1049' abut the second stepped portion 1120A (see FIG. 27).

Similar to the first embodiment, each recess 1129A, 1129B, 1129C includes a first groove portion 1129Aa, 1129Ba, 1129Ca and a second groove portion 1129Ab, 1129Bb, 1129Cb. Window portions 1131A, 1131B, 1131C are formed through the second peripheral wall portion 1123 at positions corresponding to the second groove portions 1129Ab, 1129Bb, 1129Cb, respectively. The first groove portions 1129Aa, 1129Ba, 1129Ca are opened at the second stepped portion 1120A and extends along the longitudinal direction X (central axis CA) to the stepped portion 1120.

Furthermore, the cap external body 1027 of the second embodiment includes a cylindrical wall portion 1120B. The cylindrical wall portion 1120B rises from an edge portion of the second stepped portion 1120A along the central axis CA and forms an opening portion of the cap external body 1027. When the cap 1011 is attached to the tip of the syringe 1003, the cylindrical wall portion 1120B serves as a cylindrical wall surface surrounding the stepped portions 1049c formed on the outer circumferential surfaces of the paste storage chambers 1049, 1049'. With the cylindrical wall portion 1120B rising from the edge portion of the second stepped portion 1120A, each of the first groove portions 1129Aa, 1129Ba, 1129Ca is opened inside the cylindrical wall portion 1120B. In other words, the cylindrical wall portion 1120B projects along the central axis CA beyond the engaged portions 1129.

<Operations of Paste Dispenser>

In the following, operations of the paste dispenser of the second embodiment are explained.

In the paste dispenser 1001 of the second embodiment, the engaged portions 1107 are formed in the inner circumferential surface of the mixer external body 1023. The mixer external body 1023 includes the cylindrical wall portion 1098B that projects beyond the engaged portions 1107 along the central axis CA and that forms an opening portion into which the syringe 1003 is inserted. The engaged portions 1129 are formed in the inner circumferential surface of the cap external body 1027.

The cap external body 1027 includes the cylindrical wall portion 1120B that projects beyond the engaged portions 1129 along the central axis CA and that forms an opening portion into which the syringe 1003 is inserted.

As a result, in the paste dispenser 1001 of the second embodiment, when the syringe 1003 is inserted into the mixer external body 1023, the syringe 1003 enters inside the cylindrical wall portion 1098B, and then the projection pieces 1045A, 1045B, 1045C of the engaging portions 1045 formed on the syringe 1003 are inserted into the recesses 1107A, 1107B, 1107C of the engaged portions 1107. When the syringe 1003 is inserted into the cap external body 1027 too, the syringe 1003 enters inside the cylindrical wall portion 1120B, and then the projection pieces 1045A, 1045B, 1045C of the engaging portions 1045 formed on the syringe 1003 are inserted into the recesses 1129A, 1129B, 1129C of the engaged portions 1129.

Consequently, in the paste dispenser 1001 of the second embodiment, prior to an engagement between the engaging portions 1045 and the engaged portions 1107, the cylindrical wall portion 1098B serves to align the central axis CA of the mixer external body 1023 and the central axis CA of the syringe 1003, thereby achieving an engagement between the engaging portions 1045 and the engaged portions 1107 while avoiding misalignment. Consequently, the paste dispenser 1001 of the second embodiment can make it easier to attach the static mixer 1007 to the syringe 1003.

In the paste dispenser 1001 of the second embodiment, prior to an engagement between the engaging portions 1045 and the engaged portions 1129, the cylindrical wall portion 1120B serves to align the central axis CA of the cap external body 1027 and the central axis CA of the syringe 1003, thereby achieving an engagement between the engaging portions 1045 and the engaged portions 1129 while avoiding misalignment. Consequently, the paste dispenser 1001 of the second embodiment can make it easier to attach the cap 1011 to the syringe 1003.

In the paste dispenser 1001 of the second embodiment, the mixer external body 1023 includes the projection portion 1099b that projects along the central axis CA from an opening portion (end surface 1099B of the second peripheral wall portion 1099) into which the syringe 1003 is inserted. The projection portion 1099b is formed at a position that is coincident, in the circumferential direction centered on the central axis CA, with a position where the recess 1107A as one of the engaged portions 1107 is formed. Furthermore, in the paste dispenser 1001 of the second embodiment, the cap external body 1027 includes the projection portion 1123b that projects along the central axis CA from an opening portion (end surface 1123B of the second peripheral wall portion 1123) into which the syringe 1003 is inserted. The projection portion 1123b is formed at a position that is coincident, in the circumferential direction centered on the central axis CA, with a position where the recess 1129A as one of the engaged portions 1129 is formed.

As a result, in the paste dispenser 1001 of the second embodiment, one can determine the position where the recess 1107A as one of the engaged portions 1107 is formed, from the external appearance of the mixer external body 1023. This allows the static mixer 1007 to be easily attached to the syringe 1003. The projection portion 1099b provides interference so that the opening portion (end surface 1099B of the second peripheral wall portion 1099) of the mixer external body 1023 is hardly brought into contact with a table and the like. This prevents the paste from adhering to the table and the like.

Furthermore, in the paste dispenser 1001 of the second embodiment, one can determine the position where the recess 1129A as one of the engaged portions 1129 is formed, from the external appearance of the cap external body 1027. This allows the cap 1011 to be easily attached to the syringe 1003. The projection portion 1123b provides interference so that the opening portion (end surface 1123B of the second peripheral wall portion 1123) of the cap external body 1027 is hardly brought into contact with a table and the like. This prevents the paste from adhering to the table and the like.

As above, the first and second embodiments of the present invention have been specifically described. However, it is needless to say that the present invention is not limited to these embodiments, but can be modified within the scope of the technical concept of the invention.

The paste dispenser 1 of the first embodiment has shown an example of two paste storage chambers 49, 49'. However, it suffices that the paste dispenser of the present invention is formed in the inside of the syringe body with a plurality of paste storage chambers. Thus, the paste dispenser may be formed with three or more paste storage chambers.

The paste dispenser 1 of the first embodiment has shown an example in which the engaging portions 45 formed on the syringe 3 are configured of the three projection pieces 45A, 45B, 45C, in which the engaged portions 107 formed in the mixer external body 23 are configured of the three recesses 107A, 107B, 107C, and in which the engaged portions 129 formed in the cap external body 27 are configured of the recesses 129A, 129B, 129C. However, the engaging portions 45 may be configured of a plurality of recesses, and the engaged portions 107 and the engaged portions 129 may be configured of a plurality of projection pieces.

Although the paste dispenser 1 of the first embodiment has shown an example of three engagement pairs, the number of engagement pairs may be freely set as long as it is at least three pairs.

With respect to the above description of the first and second embodiments, the following is further disclosed.

(1) A paste dispenser comprising:

a syringe that comprises a plurality of paste storage chambers filled with pastes, a plurality of discharge ports, each of which opens at one end of each of the plurality of the paste storage chambers, and a plurality of filling ports, each of which opens at another end of each of the plurality of the paste storage chambers;

a plunger that is inserted into the paste storage chambers from the filling ports and is configured to push out the pastes through the discharge ports; and

an attachment member that is detachably attached to a tip end portion of the syringe where the discharge ports are formed,

wherein the attachment member comprises:

a tubular external body into which the syringe is inserted, the external body being rotatable about a central axis of the syringe; and

an inside member that is disposed inside the external body, the inside member comprising a plurality of insertion portions that are respectively inserted into the plurality of the discharge ports and being rotatable about the central axis relative to the external body,

wherein the external body is fixed to the syringe via an engagement structure, the engagement structure configured to engage by insertion of the syringe along the central axis and by rotation of the external body about the central axis,

wherein the engagement structure comprises at least three engagement pairs, each pair comprising an engaging portion that is formed on the syringe and an engaged portion that is formed in the external body and is engageable with the engaging portion, and

wherein the at least three engagement pairs are aligned along a rotation direction of the external body and are non-point symmetrical about a central point on the central axis when viewed along the central axis.

(2) The paste dispenser according to (1), wherein the at least three engagement pairs are aligned at non-equal intervals along the rotation direction of the external body.

(3) The paste dispenser according to (1) or (2), wherein at least one of the at least three engagement pairs has a different shape when viewed along the central axis.

(4) The paste dispenser according to any one of (1) to (3), wherein one of the engaging portion and the engaged portion is formed by a recess comprising a first groove portion extending toward the central axis and a second groove portion extending from the first groove portion in the rotation direction of the external body,

wherein another one of the engaging portion and the engaged portion is formed by a projection piece that is insertable into the recess.

(5) The paste dispenser according to any one of (1) to (4),

wherein an outer peripheral surface of the external body has a polygonal shape when viewed along the central axis,

wherein an inner circumferential surface of the external body has a circular sectional shape when viewed along the central axis,

wherein at least one of the engaged portions is formed at a position corresponding to a corner portion of the outer peripheral surface, and at least one of the engaged portions is formed at a position corresponding to a flat surface portion of the outer peripheral surface.

(6) The paste dispenser according to any one of (1) to (5), wherein the inside member comprises a base portion that is fitted into the external body and on which the plurality of the insertion portions are formed,

wherein the insertion portions have a columnar shape that is capable of sealing the discharge ports.

(7) The paste dispenser according to any one of (1) to (6), wherein the external body comprises a top wall portion that faces an opening portion into which the syringe is inserted, and a top through tube that is formed on the top wall portion,

wherein the inside member comprises a mixing tip body and a mixer housing,

wherein the mixing tip body comprises:

a base portion on which the plurality of insertion portions are formed on a first end surface, and on which elements aligned along the central axis are formed on a second end surface opposite the first end surface; and

paste passages that continuously penetrate the insertion portions and the base portion and open at the second end surface, and

wherein the mixer housing comprises:

an element housing portion into which the elements are insertable and which is open at a tip; and

a base housing portion into which the base portion is fittable,

wherein, when the mixer housing is combined with the mixing tip body, the element housing portion is inserted into the top through tube and is attached to the external body.

(8) The paste dispenser according to any one of (1) to (7), wherein the engaged portions are formed in the inner circumferential surface of the external body,

wherein the external body comprises a cylindrical wall portion that projects beyond the engaged portions, the cylindrical wall portion having a cylindrical shape that defines an opening portion into which the syringe is inserted.

(9) The paste dispenser according to any one of (1) to (8), wherein the external body comprises a projection portion that projects along the central axis from an opening portion into which the syringe is inserted, wherein the projection portion is formed at a position that is coincident, in a circumferential direction about the central axis, with a position where one of the engaged portions is formed.

(10) The paste dispenser according to any one of (1) to (9), wherein the paste dispenser is used for injecting a paste as a dental material.

[Cross-reference to Related Application]

The present application is based upon and claims the benefit of priority from Japanese Patent Application No. 2023-108657 filed to the Japan Patent Office on June 30, 2023, the entire disclosure of which is incorporated in its entirety in the present specification by reference.

**Claims**

1. A paste dispenser comprising:

a syringe that comprises a plurality of paste storage chambers filled with pastes, a plurality of discharge ports, each of which opens at one end of each of the plurality of the paste storage chambers, and a plurality of filling ports, each of which opens at another end of each of the plurality of the paste storage chambers;

a plunger that is inserted into the paste storage chambers from the filling ports and is configured to push out the pastes through the discharge ports; and

an attachment member that is detachably attached to a tip end portion of the syringe where the discharge ports are formed,

wherein the attachment member comprises:

a tubular external body into which the syringe is inserted, the external body being rotatable about a central axis of the syringe; and

an inside member that is disposed inside the external body, the inside member comprising a plurality of insertion portions that are respectively inserted into the plurality of the discharge ports and being rotatable about the central axis relative to the external body,

wherein the external body is fixed to the syringe via an engagement structure, the engagement structure engaging by insertion of the syringe along the central axis and by rotation of the external body about the central axis,

wherein the engagement structure comprises at least three engagement pairs, each pair comprising an engaging portion that is formed on the syringe and an engaged portion that is formed in the external body and is engageable with the engaging portion, and

wherein the at least three engagement pairs are aligned along a rotation direction of the external body and are non-point symmetrical about a central point on the central axis when viewed along the central axis.

2. The paste dispenser according to claim 1, wherein the at least three engagement pairs are aligned at non-equal intervals along the rotation direction of the external body.

3. The paste dispenser according to claim 1 or 2, wherein at least one of the at least three engagement pairs has a different shape when viewed along the central axis.

4. The paste dispenser according to claim 1 or 2, wherein one of the engaging portion and the engaged portion is formed by a recess comprising a first groove portion extending toward the central axis and a second groove portion extending from the first groove portion in the rotation direction of the external body,

wherein another one of the engaging portion and the engaged portion is formed by a projection piece that is insertable into the recess.

5. The paste dispenser according to claim 1 or 2,

wherein an outer peripheral surface of the external body has a polygonal shape when viewed along the central axis,

wherein an inner circumferential surface of the external body has a circular sectional shape when viewed along the central axis,

wherein at least one of the engaged portions is formed at a position corresponding to a corner portion of the outer peripheral surface, and at least one of the engaged portions is formed at a position corresponding to a flat surface portion of the outer peripheral surface.

6. The paste dispenser according to claim 1 or 2, wherein the inside member comprises a base portion that is fitted into the external body and on which the plurality of the insertion portions are formed,

wherein the insertion portions have a columnar shape that is capable of sealing the discharge ports.

7. The paste dispenser according to claim 1 or 2, wherein the external body comprises a top wall portion that faces an opening portion into which the syringe is inserted, and a top through tube that is formed on the top wall portion,

wherein the inside member comprises a mixing tip body and a mixer housing,

wherein the mixing tip body comprises:

a base portion on which the plurality of insertion portions are formed on a first end surface, and on which elements aligned along the central axis are formed on a second end surface opposite the first end surface; and

paste passages that continuously penetrate the insertion portions and the base portion and open at the second end surface, and

wherein the mixer housing comprises:

an element housing portion into which the elements are insertable and which is open at a tip; and

a base housing portion into which the base portion is fittable,

wherein, when the mixer housing is combined with the mixing tip body, the element housing portion is inserted into the top through tube and is attached to the external body.

8. The paste dispenser according to claim 1 or 2, wherein the engaged portions are formed in the inner circumferential surface of the external body,

wherein the external body comprises a cylindrical wall portion that projects beyond the engaged portions, the cylindrical wall portion having a cylindrical shape that defines an opening portion into which the syringe is inserted.

9. The paste dispenser according to claim 1 or 2, wherein the external body comprises a projection portion that projects along the central axis from an opening portion into which the syringe is inserted, wherein the projection portion is formed at a position that is coincident, in a circumferential direction about the central axis, with a position where one of the engaged portions is formed.

10. The paste dispenser according to claim 1 or 2, wherein the paste dispenser is used for injecting a paste as a dental material.

[FIG.1]

[FIG.2]

[FIG.3]

[FIG.4A]

[FIG.4B]

[FIG.4C]

[FIG.4D]

[FIG.5]

[FIG.6]

[FIG.7A]

[FIG.7B]

[FIG.7C]

[FIG.7D]

[FIG.8]

[FIG.9A]

83

15

X

Z

Y

81D

85

81

81C

85C

81A

[FIG.9B]

81

15

81A

81B

81C

T2

Z

Y

W2

[FIG.10]

[FIG.11]

EP 4 736 806 A1

(SIDE DIRECTION)

(FRONT DIRECTION)

[FIG.12A]

[FIG.12B]

[FIG.13]

[FIG.14A]

[FIG.14B]

[FIG.15]

[FIG.16A]

101 95 23

X

Y

XVIII | XVIII

109C

99

109A 99A 99B

[FIG.16B]

101 23

97

99

Z

Y

XVII | XVII

AR2

CA

95

[FIG.16C]

23

105A 99A

105B CA 107C(107Ca)

Z

107A(107Aa) 98

Y

99

98 107B(107Ba)

99B 105B'

101 99A 98

105A' 95

[FIG.17]

[FIG.18]

[FIG.19A]

117
111B
25(IM)
111
117C
115
113'

X
Z
Y

[FIG.19B]

111A   115   117C   25
XX   XX
113   113'
115'

Z
Y

[FIG.20]

111B   25
111
117C
113
115   111A   113'

X
Y

[FIG.21A]

119

27(OM)

121

XXIII

131C

XXIII

131A  123A  123B  123

X

Y

[FIG.21B]

CA  119

27

123

XXII

XXII

121

AR2

Z

Y

[FIG.21C]

127A  123A

127B  CA

129A(129Aa)  129C(129Ca)

120

120

123

129B(129Ba)

123B  123A  119  120

127A'  127B'

27

Z

Y

[FIG.22]

[FIG.23]

[FIG.24]

[FIG.25]

[FIG.26]

[FIG.27]

[FIG.28A]

[FIG.28B]

[FIG.28C]

[FIG.29A]

[FIG.29B]

[FIG.29C]

[FIG.30A]

1021

1037A

1037

XXX

1093A

1093

1093B

XXX

[FIG.30B]

CA

1037A

1021

1037

1093A

1093

1093B

L4

1093C

[FIG.31A]

[FIG.31B]

[FIG.31C]

[FIG.31D]

[FIG.31E]

[FIG.31F]

[FIG.31G]

[FIG.32A]

[FIG.32B]

AR2　　　1119　　　　　　　　1027

1121

1131A

1123

1120B　　　　　　　　1123B

1123a　　　1123b

X

Z

[FIG.32C]

XXXIIF

1027

1119

1123

1121

XXXIIE　　　　　　　　　XXXIIE

1123a

AR2

XXXIIF

Z

Y

[FIG.32D]

[FIG.32E]

[FIG.32F]

[FIG.32G]

## INTERNATIONAL SEARCH REPORT

| International application No. |
| --- |
| **PCT/JP2024/022705** |

| **A.** | **CLASSIFICATION OF SUBJECT MATTER** |
| --- | --- |

*A61C 5/64*(2017.01)i
FI: A61C5/64

According to International Patent Classification (IPC) or to both national classification and IPC

| **B.** | **FIELDS SEARCHED** |
| --- | --- |

Minimum documentation searched (classification system followed by classification symbols)

A61C5/64; A61M5/19

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| **C.** | **DOCUMENTS CONSIDERED TO BE RELEVANT** | |
| --- | --- | --- |

| Category* | Citation of document, with indication, where appropriate, of the relevant passages | Relevant to claim No. |
| --- | --- | --- |
| A | JP 2007-504058 A (MIXPAC SYSTEMS AG) 01 March 2007 (2007-03-01) entire text, all drawings | 1-10 |
| A | JP 2017-526401 A (SULZER MIXPAC AG) 14 September 2017 (2017-09-14) entire text, all drawings | 1-10 |
| A | JP 2009-509670 A (DENTSPLY INTERNATIONAL INC.) 12 March 2009 (2009-03-12) entire text, all drawings | 1-10 |
| A | JP 2002-200098 A (IVOCLAR VIVADENT AG) 16 July 2002 (2002-07-16) entire text, all drawings | 1-10 |
| A | JP 2008-504956 A (MIXPAC SYSTEMS AG) 21 February 2008 (2008-02-21) entire text, all drawings | 1-10 |
| A | US 2018/0177569 A1 (KETTENBACH GMBH & CO. KG) 28 June 2018 (2018-06-28) entire text, all drawings | 1-10 |

☑ Further documents are listed in the continuation of Box C.     ☑ See patent family annex.

| | |
| --- | --- |
| *    Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
| --- | --- |
| **01 August 2024** | **20 August 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

# EP 4 736 806 A1

**INTERNATIONAL SEARCH REPORT**

International application No.

**PCT/JP2024/022705**

### C. DOCUMENTS CONSIDERED TO BE RELEVANT

| Category* | Citation of document, with indication, where appropriate, of the relevant passages | Relevant to claim No. |
|---|---|---|
| A | JP 2009-537291 A (MEDMIX SYSTEMS AG) 29 October 2009 (2009-10-29)<br>entire text, all drawings | 1-10 |
| A | JP 2012-56635 A (SULZER MIXPAC AG) 22 March 2012 (2012-03-22)<br>entire text, all drawings | 1-10 |
| P, A | WO 2023/222719 A2 (MEDMIX SWITZERLAND AG) 23 November 2023 (2023-11-23)<br>entire text, all drawings | 1-10 |

Form PCT/ISA/210 (second sheet) (July 2022)

### INTERNATIONAL SEARCH REPORT
#### Information on patent family members

International application No.

**PCT/JP2024/022705**

| Patent document cited in search report | | | Publication date (day/month/year) | Patent family member(s) | | | Publication date (day/month/year) |
|---|---|---|---|---|---|---|---|
| JP | 2007-504058 | A | 01 March 2007 | WO | 2005/021394 | A2 | |
| | | | | entire text, all drawings | | | |
| | | | | US | 2007/0090079 | A1 | |
| | | | | EP | 1660377 | A2 | |
| | | | | CN | 1845854 | A | |
| | | | | AT | 452834 | T1 | |
| | | | | DK | 1660377 | T3 | |
| | | | | ES | 2336919 | T3 | |
| | | | | SI | 1660377 | T1 | |
| | | | | KR | 10-2007-0020363 | A | |
| | | | | PL | 1660377 | T3 | |
| JP | 2017-526401 | A | 14 September 2017 | US | 2017/0156820 | A1 | |
| | | | | entire text, all drawings | | | |
| | | | | WO | 2015/197492 | A1 | |
| | | | | EP | 2959861 | A1 | |
| | | | | EP | 3160380 | A1 | |
| | | | | CA | 2952316 | A1 | |
| | | | | CN | 106457173 | A | |
| | | | | KR | 10-2017-0028366 | A | |
| JP | 2009-509670 | A | 12 March 2009 | US | 2007/0072146 | A1 | |
| | | | | entire text, all drawings | | | |
| | | | | US | 2010/0028831 | A1 | |
| | | | | WO | 2007/041266 | A1 | |
| | | | | EP | 1928344 | A1 | |
| | | | | CA | 2624536 | A1 | |
| JP | 2002-200098 | A | 16 July 2002 | US | 2002/0081551 | A1 | |
| | | | | entire text, all drawings | | | |
| | | | | EP | 1219263 | A2 | |
| | | | | DE | 10064005 | A1 | |
| | | | | CA | 2360832 | A1 | |
| JP | 2008-504956 | A | 21 February 2008 | US | 2008/0287880 | A1 | |
| | | | | entire text, all drawings | | | |
| | | | | WO | 2006/005206 | A1 | |
| | | | | EP | 1763405 | A1 | |
| | | | | CN | 1980748 | A | |
| | | | | AT | 529195 | T1 | |
| | | | | ES | 2371729 | T3 | |
| | | | | DK | 1763405 | T3 | |
| | | | | PL | 1763405 | T3 | |
| US | 2018/0177569 | A1 | 28 June 2018 | WO | 2017/001412 | A1 | |
| | | | | EP | 3313500 | A1 | |
| | | | | DE | 102015110442 | A1 | |
| | | | | BR | 112017027244 | A2 | |
| | | | | ES | 2750830 | T3 | |
| JP | 2009-537291 | A | 29 October 2009 | US | 2009/0230214 | A1 | |
| | | | | entire text, all drawings | | | |
| | | | | WO | 2007/131371 | A1 | |
| | | | | EP | 2018132 | A1 | |
| | | | | KR | 10-2009-0014160 | A | |
| | | | | CN | 101442954 | A | |
| | | | | AT | 451072 | T1 | |

Form PCT/ISA/210 (patent family annex) (July 2022)

**INTERNATIONAL SEARCH REPORT**
Information on patent family members

International application No.

**PCT/JP2024/022705**

| Patent document cited in search report | | | Publication date (day/month/year) | Patent family member(s) | | | Publication date (day/month/year) |
|---|---|---|---|---|---|---|---|
| | | | | DK | 2018132 | T3 | |
| | | | | ES | 2335709 | T3 | |
| | | | | PT | 2018132 | E | |
| JP | 2012-56635 | A | 22 March 2012 | US | 2012/0061343 | A1 | |
| | | | | entire text, all drawings | | | |
| | | | | US | 2014/0346133 | A1 | |
| | | | | EP | 2428461 | A1 | |
| | | | | CN | 102398723 | A | |
| | | | | CA | 2746283 | A1 | |
| | | | | IL | 214993 | A | |
| | | | | KR | 10-2012-0026969 | A | |
| | | | | TW | 201226275 | A | |
| | | | | RU | 2011137368 | A | |
| | | | | BR | PI1104608 | A2 | |
| WO | 2023/222719 | A2 | 23 November 2023 | WO | 2023/222718 | A1 | |
| | | | | WO | 2023/222720 | A2 | |
| | | | | EP | 4279185 | A1 | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007504058 A
- JP 2023108657 A